(19) 

Europäisches
Patentamt
European
Patent Office
Office européen
des brevets

(11) **EP 4 376 479 A1**

(12) **EUROPEAN PATENT APPLICATION**
published in accordance with Art. 153(4) EPC

(43) Date of publication:
**29.05.2024 Bulletin 2024/22**

(21) Application number: **22855488.7**

(22) Date of filing: **11.08.2022**

(51) International Patent Classification (IPC):
***H04W 28/06*** (2009.01)

(52) Cooperative Patent Classification (CPC):
**H04W 28/06**

(86) International application number:
**PCT/CN2022/111628**

(87) International publication number:
**WO 2023/016508 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.08.2021 CN 202110918725**

(71) Applicant: **Huawei Technologies Co., Ltd.
Shenzhen, Guangdong 518129 (CN)**

(72) Inventors:
• **CHAI, Xiaomeng
Shenzhen, Guangdong 518129 (CN)**
• **WU, Yiqun
Shenzhen, Guangdong 518129 (CN)**

(74) Representative: **Gill Jennings & Every LLP
The Broadgate Tower
20 Primrose Street
London EC2A 2ES (GB)**

(54) **CHANNEL INFORMATION FEEDBACK AND RECOVERY METHOD AND DEVICE**

(57) This application provides a channel information feedback method, a channel information recovery method and an apparatus. The method includes: A terminal device receives a first reference signal from a network device; the terminal device performs channel estimation based on the first reference signal, to obtain a first channel state matrix; the terminal device performs sampling on the first channel state matrix based on a first sparse pattern, to obtain a sparse channel state matrix, where the first sparse pattern is configured by the network device, and the first sparse pattern is used for performing sampling on at least one dimension of the first channel state matrix; and the terminal device sends first channel information to the network device, where the first channel information indicates the sparse channel state matrix.

FIG. 6

**Description**

**CROSS-REFERENCE TO RELATED APPLICATIONS**

This application claims priority to Chinese Patent Application No. 202110918725.9, filed with the China National Intellectual Property Administration on August 11, 2021 and entitled "CHANNEL INFORMATION FEEDBACK METHOD, CHANNEL INFORMATION RECOVERY METHOD, AND APPARATUS", which is incorporated herein by reference in its entirety.

**TECHNICAL FIELD**

This application relates to the field of communication technologies, and in particular, to a channel information feedback method, a channel information recovery method, and an apparatus.

**BACKGROUND**

In communication systems such as long term evolution (long term evolution, LTE) and new radio (new radio, NR), a base station needs to obtain downlink channel state information (channel state information, CSI), to determine configurations such as a resource for scheduling a downlink data channel of a terminal device, a modulation and coding scheme (modulation and coding scheme, MCS), and a precoding matrix. In a time division duplex (time division duplex, TDD) mode, because there is reciprocity between an uplink channel and a downlink channel, the base station may obtain uplink CSI by measuring an uplink reference signal, to infer accurate downlink CSI, and for example, use the uplink CSI as downlink CSI. In a frequency division duplex (frequency division duplex, FDD) mode, because the uplink channel and the downlink channel are not necessarily reciprocal, the downlink CSI needs to be obtained from the terminal device. For example, the terminal device obtains the downlink CSI by measuring the reference signal, and feeds back the CSI to the base station.

In an existing wideband multi-antenna system, high resource overheads are required for CSI feedback. To reduce the CSI feedback overheads, the terminal device performs operations such as compression and quantization on the CSI, to feed back the compressed and quantized CSI. The operations such as compression and quantization on the CSI cause a loss in CSI accuracy. If the downlink CSI obtained by the base station is less accurate, scheduled downlink transmission cannot match a current downlink channel, and downlink transmission performance is poorer.

In conclusion, how to improve CSI feedback accuracy while reducing CSI feedback overheads is an urgent problem to be resolved.

**SUMMARY**

This application provides a channel information feedback method, a channel information recovery method, and an apparatus, to improve channel information feedback accuracy while reducing channel information feedback overheads.

According to a first aspect, this application provides a channel information feedback method. The method is applicable to an Al-based channel information compression feedback scenario. The method is performed by a terminal device or a module in a terminal device. Herein, an example in which the method is performed by the terminal device is used for description. The method includes: receiving, by the terminal device, a first reference signal from a network device; obtaining a first channel state matrix based on the first reference signal; performing sampling on the first channel state matrix based on a first sparse pattern, to obtain a sparse channel state matrix, where the first sparse pattern is configured by the network device, and the first sparse pattern is used for performing sampling on at least one dimension of the first channel state matrix; and sending first channel information to the network device, where the first channel information indicates the sparse channel state matrix.

According to the foregoing method, when the terminal device does not need to participate in training a neural network, and the terminal device does not need to feed back a large amount of complete downlink channel information, the network device independently trains the neural network, and when obtaining the first channel information from the terminal device, the network device may recover the downlink channel information through the neural network. According to the method, a requirement on a capability of the terminal device can be reduced, and feedback overheads caused by feeding back the complete downlink channel information by the terminal device can be avoided.

In a possible design, the method further includes: sending a second reference signal to the network device, where the second reference signal is used to train a neural network corresponding to the first sparse pattern, and the neural network is used to recover the first channel state matrix based on the sparse channel state matrix.

In a possible design, second precoding used for sending the second reference signal is the same as first precoding used for receiving the first reference signal.

According to the foregoing method, it can be ensured that a transmit beam used for sending the second reference signal is the same as a receiving beam used for receiving the first reference signal.

In a possible design, a bandwidth of the first reference signal is less than or equal to a bandwidth of the second reference signal.

In a possible design, a subcarrier spacing corresponding to the first reference signal is greater than or equal to a subcarrier spacing corresponding to the second reference signal.

According to the foregoing method, the solution in this embodiment of this application can also be used when the bandwidth and the subcarrier spacing of the first reference signal are inconsistent with the bandwidth and the subcarrier spacing of the second channel information that needs to be obtained.

In a possible design, dimensions of the first channel state matrix include at least one of an antenna dimension of the terminal device, an antenna dimension of the network device, and a frequency domain dimension and a time domain dimension corresponding to the first reference signal.

The first sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

According to a second aspect, this application further provides a communication apparatus. The communication apparatus has a function of implementing any method provided in the first aspect. The communication apparatus may be implemented by hardware, or may be implemented by hardware executing corresponding software. The hardware or the software includes one or more units or modules corresponding to the foregoing functions.

In a possible implementation, the communication apparatus includes a processor, and the processor is configured to support the communication apparatus in performing a corresponding function in the foregoing method. The communication apparatus may further include a memory, and the memory may be coupled to the processor, and store program instructions and data that are necessary for the communication apparatus. Optionally, the communication apparatus further includes an interface circuit, and the interface circuit is configured to support communication between the communication apparatus and another device.

In a possible implementation, the communication apparatus may be a terminal device, or a chip or a module in a terminal device.

In a possible implementation, the communication apparatus includes corresponding functional modules, respectively configured to implement the steps in the method. The function may be implemented by hardware, or may be implemented by hardware executing corresponding software. The hardware or software includes one or more modules corresponding to the foregoing functions.

In a possible implementation, a structure of the communication apparatus includes a processing unit and a communication unit. These units may perform corresponding functions in the foregoing method examples. For details, refer to the descriptions in the method according to the first aspect. Details are not described herein again.

According to a third aspect, this application provides a channel information recovery method. The method is applicable to an AI-based channel information compression feedback scenario. The method is performed by a network device or a module in a network device. Herein, an example in which the method is performed by the network device is used for description. The method includes: sending, by the network device, a first reference signal to a terminal device; receiving first channel information from the terminal device, where the first channel information indicates a sparse channel state matrix, the sparse channel state matrix is obtained by performing sampling on at least one dimension of a first channel state matrix by using a first sparse pattern, and the first channel state matrix is determined based on the first reference signal; and processing the sparse channel state matrix through a neural network, to obtain a second channel state matrix, where the second channel state matrix is a recovery value of the first channel state matrix, and the neural network is trained by using data obtained by performing sampling based on the first sparse pattern.

In a possible design, the method further includes: receiving a second reference signal from the terminal device; obtaining a third channel state matrix based on the second reference signal; obtaining a fourth channel state matrix based on the third channel state matrix, where a length of the fourth channel state matrix in a subcarrier dimension is equal to a length of the first channel state matrix in a subcarrier dimension; a length of the fourth channel state matrix in a receiving antenna dimension is equal to a length of the first channel state matrix in a transmit antenna dimension; and a length of the fourth channel state matrix in a transmit antenna dimension is equal to a length of the first channel state matrix in a receiving antenna dimension; and performing sampling on at least one dimension of the fourth channel state matrix based on the first sparse pattern, to obtain a fifth channel state matrix, where the neural network is obtained by training a plurality of fourth channel state matrices and corresponding fifth channel state matrices.

In a possible design, the method further includes: receiving a second reference signal from the terminal device, where the second reference signal is used to train the neural network corresponding to the first sparse pattern, and the neural network is used to recover the first channel state matrix based on the sparse channel state matrix.

In a possible design, fourth precoding used for receiving the second reference signal is the same as third precoding used for sending the first reference signal.

In a possible design, a bandwidth of the first reference signal is less than or equal to a bandwidth of the second reference signal.

In a possible design, a subcarrier spacing corresponding to the first reference signal is the same as a subcarrier spacing corresponding to the second reference signal.

In a possible design, dimensions of the first channel state matrix include at least one of an antenna dimension of the terminal device, an antenna dimension of the network device, and a frequency domain dimension and a time domain dimension corresponding to the first reference signal.

The first sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

According to a fourth aspect, this application further provides a communication apparatus. The communication apparatus has a function of implementing any method provided in the third aspect. The communication apparatus may be implemented by hardware, or may be implemented by hardware executing corresponding software. The hardware or the software includes one or more units or modules corresponding to the foregoing functions.

In a possible implementation, the communication apparatus includes a processor, and the processor is configured to support the communication apparatus in performing a corresponding function in the foregoing method. The communication apparatus may further include a memory, and the memory may be coupled to the processor, and store program instructions and data that are necessary for the communication apparatus. Optionally, the communication apparatus further includes an interface circuit, and the interface circuit is configured to support communication between the communication apparatus and another device.

In a possible implementation, the communication apparatus may be a network device, or a chip or a module in a network device.

In a possible implementation, a structure of the communication apparatus includes a processing unit and a communication unit. These units may perform corresponding functions in the foregoing method examples. For details, refer to the descriptions in the method according to the third aspect. Details are not described herein again.

According to a fifth aspect, this application provides a channel information feedback method. The method is applicable to an AI-based channel information compression feedback scenario. The method is performed by a terminal device or a module in a terminal device. Herein, an example in which the method is performed by the terminal device is used for description. The method includes: receiving, by the terminal device, a first reference signal from a network device; performing channel estimation based on the first reference signal, to obtain a first channel state matrix; determining a first channel eigen matrix based on the first channel state matrix; performing sampling on the first channel eigen matrix based on a second sparse pattern, to obtain a first sparse matrix, where the second sparse pattern is configured by the network device, and the second sparse pattern is used for performing sampling on at least one dimension of the first channel eigen matrix; and sending first channel information to the network device, where the first channel information indicates the first sparse matrix.

According to the foregoing method, when the terminal device does not need to participate in training a neural network, the network device can recover the complete first channel eigen matrix by training the neural network and through the neural network and the first sparse matrix fed back by the terminal device with reference to similar correlations between uplink and downlink channels. This can reduce a requirement on a capability of the terminal device, and avoid feedback overheads caused by feeding back the complete first channel eigen matrix by the terminal device.

In a possible design, the method further includes: sending a second reference signal to the network device, where the second reference signal is used to train a neural network corresponding to the first sparse pattern, and the neural network is used to recover the second matrix based on the first sparse matrix.

In a possible design, second precoding used for sending the second reference signal is the same as first precoding used for receiving the first reference signal.

In a possible design, a bandwidth of the first reference signal is less than or equal to a bandwidth of the second reference signal.

In a possible design, a subcarrier spacing corresponding to the first reference signal is the same as a subcarrier spacing corresponding to the second reference signal.

In a possible design, dimensions of the first channel state matrix include at least one of an antenna dimension of the terminal device, an antenna dimension of the network device, and a frequency domain dimension and a time domain dimension corresponding to the first reference signal.

The second sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

According to a sixth aspect, this application further provides a communication apparatus. The communication apparatus has a function of implementing any method provided in the fifth aspect. The communication apparatus may be implemented by hardware, or may be implemented by hardware executing corresponding software. The hardware or the software includes one or more units or modules corresponding to the foregoing functions.

In a possible implementation, the communication apparatus includes a processor, and the processor is configured to support the communication apparatus in performing a corresponding function in the foregoing method. The communication apparatus may further include a memory, and the memory may be coupled to the processor, and store program instructions and data that are necessary for the communication apparatus. Optionally, the communication apparatus further includes an interface circuit, and the interface circuit is configured to support communication between the communication apparatus and another device.

In a possible implementation, the communication apparatus may be a terminal device, or a chip or a module in a terminal device.

In a possible implementation, a structure of the communication apparatus includes a processing unit and a communication unit. These units may perform corresponding functions in the foregoing method examples. For details, refer to the descriptions in the method according to the fifth aspect. Details are not described herein again.

According to a seventh aspect, this application provides a channel information recovery method. The method is applicable to an AI-based channel information compression feedback scenario. The method is performed by a network device or a module in a network device. Herein, an example in which the method is performed by the network device is used for description. The method includes: sending, by the network device, a first reference signal to a terminal device; receiving first channel information from the terminal device, where the first channel information indicates a first sparse matrix, the first sparse matrix is obtained by performing sampling on at least one dimension of a first channel eigenvector matrix by using a second sparse pattern, the first channel eigen matrix is determined based on a first channel state matrix, and the first channel state matrix is determined based on the first reference signal; and processing the first sparse matrix through a neural network, to obtain a second matrix, where the second matrix is a recovery value of the first channel eigen matrix, and the neural network is trained by using data obtained by performing sampling based on the second sparse pattern.

In a possible design, the method further includes: receiving a second reference signal from the terminal device, where the second reference signal is used to train the neural network corresponding to the second sparse pattern, and the neural network is used to recover the second matrix based on the first sparse matrix.

In a possible design, fourth precoding used for receiving the second reference signal is the same as third precoding used for sending the first reference signal.

In a possible design, a bandwidth of the first reference signal is less than or equal to a bandwidth of the second reference signal.

In a possible design, a subcarrier spacing corresponding to the first reference signal is the same as a subcarrier spacing corresponding to the second reference signal.

In a possible design, dimensions of the first channel state matrix include at least one of an antenna dimension of the terminal device, an antenna dimension of the network device, and a frequency domain dimension and a time domain dimension corresponding to the first reference signal.

The second sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

According to an eighth aspect, this application further provides a communication apparatus. The communication apparatus has a function of implementing any method provided in the seventh aspect. The communication apparatus may be implemented by hardware, or may be implemented by hardware executing corresponding software. The hardware or the software includes one or more units or modules corresponding to the foregoing functions.

In a possible implementation, the communication apparatus includes a processor, and the processor is configured to support the communication apparatus in performing a corresponding function in the foregoing method. The communication apparatus may further include a memory, and the memory may be coupled to the processor, and store program instructions and data that are necessary for the communication apparatus. Optionally, the communication apparatus further includes an interface circuit, and the interface circuit is configured to support communication between the communication apparatus and another device.

In a possible implementation, the communication apparatus may be a network device, or a chip or a module in a network device.

In a possible implementation, a structure of the communication apparatus includes a processing unit and a communication unit. These units may perform corresponding functions in the foregoing method examples. For details, refer to the descriptions in the method according to the seventh aspect. Details are not described herein again.

According to a ninth aspect, a communication apparatus is provided, including a processor and a memory. The memory stores a computer program or instructions, and the processor is configured to execute the computer program or the instructions stored in the memory, to implement the method in any one of the possible implementations of the first aspect.

According to a tenth aspect, a communication apparatus is provided, including a processor and a memory. The memory stores a computer program or instructions, and the processor is configured to execute the computer program or the instructions stored in the memory, to implement the method in any one of the possible implementations of the third aspect.

According to an eleventh aspect, a communication apparatus is provided, including a processor and a memory. The memory stores a computer program or instructions, and the processor is configured to execute the computer program or the instructions stored in the memory, to implement the method in any one of the possible implementations of the fifth aspect.

According to a twelfth aspect, a communication apparatus is provided, including a processor and a memory. The memory stores a computer program or instructions, and the processor is configured to execute the computer program or the instructions stored in the memory, to implement the method in any one of the possible implementations of the seventh aspect.

According to a thirteenth aspect, a communication apparatus is provided, including a processor and an interface circuit, and optionally, further including a memory. The memory stores a computer program or instructions. The interface circuit is configured to receive a signal from another communication apparatus other than the communication apparatus and transmit the signal to the processor, or send the signal from the processor to the another communication apparatus other than the communication apparatus. The processor is configured to execute the computer program or the instructions stored in the memory, to implement the method in any one of the possible implementations of the first aspect or the fifth aspect.

According to a fourteenth aspect, a communication apparatus is provided, including a processor and an interface circuit, and optionally, further including a memory. The memory stores a computer program or instructions. The interface circuit is configured to receive a signal from another communication apparatus other than the communication apparatus and transmit the signal to the processor, or send the signal from the processor to the another communication apparatus other than the communication apparatus. The processor is configured to execute the computer program or the instructions stored in the memory, to implement the method in any one of the possible implementations of the third aspect or the seventh aspect.

According to a fifteenth aspect, a computer-readable storage medium is provided. The computer-readable storage medium stores a computer program or instructions, and when the computer program or the instructions is/are run on a computer, the computer is enabled to implement the method in any one of the possible implementations of the first aspect, the third aspect, the fifth aspect, or the seventh aspect.

According to a sixteenth aspect, a computer program product storing computer-readable instructions is provided. When the computer-readable instructions are run on a computer, the computer is enabled to implement the method in any one of the possible implementations of the first aspect, the third aspect, the fifth aspect, or the seventh aspect.

According to a seventeenth aspect, a chip is provided. The chip includes a processor, and may further include a memory, configured to execute a computer program or instructions stored in the memory, so that a chip system implements the method in any one of the possible implementations of the first aspect, the third aspect, the fifth aspect, or the seventh aspect.

According to an eighteenth aspect, a communication apparatus is provided, including a processor and an interface circuit. The interface circuit is configured to receive a signal from another communication apparatus other than the communication apparatus and transmit the signal to the processor, or send the signal from the processor to the another communication apparatus other than the communication apparatus. The processor is configured to execute a computer program or instructions, to implement the method in any one of the possible implementations of the first aspect, the third aspect, the fifth aspect, or the seventh aspect.

According to a nineteenth aspect, a communication apparatus is provided, including a module configured to implement the method in any one of the possible implementations of the first aspect.

According to a twentieth aspect, a communication apparatus is provided, including a module configured to implement the method in any one of the possible implementations of the third aspect.

According to a twenty-first aspect, a communication apparatus is provided, including a module configured to implement the method in any one of the possible implementations of the fifth aspect.

According to a twenty-second aspect, a communication apparatus is provided, including a module configured to implement the method in any one of the possible implementations of the seventh aspect.

According to a twenty-third aspect, a communication system is provided. The system includes the apparatus (for example, the terminal device) according to the second aspect and the apparatus (for example, the network device) according to the fourth aspect.

According to a twenty-fourth aspect, a communication system is provided. The system includes the apparatus (for example, the terminal device) according to the sixth aspect and the apparatus (for example, the network device) according to the eighth aspect.

**BRIEF DESCRIPTION OF DRAWINGS**

FIG. 1 is a schematic diagram of a network architecture according to an embodiment of this application;
FIG. 2 is a schematic diagram of a layer relationship of a neural network according to an embodiment of this application;
FIG. 3 is a schematic diagram of an AI network structure applicable to an embodiment of this application;
FIG. 4 is a schematic flowchart of a neural network training method according to an embodiment of this application;
FIG. 5 is a schematic diagram of a structure of an AI model according to an embodiment of this application;
FIG. 6 is a schematic flowchart of a channel information feedback method and a channel information recovery method according to an embodiment of this application;
FIG. 7 is a schematic flowchart of a neural network training method according to an embodiment of this application;
FIG. 8 is a schematic diagram of a structure of an AI model according to an embodiment of this application;
FIG. 9 is a schematic flowchart of a channel information feedback method and a channel information recovery method according to an embodiment of this application;
FIG. 10 is a schematic diagram of a structure of a communication apparatus according to an embodiment of this application; and
FIG. 11 is a schematic diagram of a structure of a communication apparatus according to an embodiment of this application.

**DESCRIPTION OF EMBODIMENTS**

The following describes embodiments of this application in detail with reference to accompanying drawings of this specification.

The technical solutions in embodiments of this application may be applied to various communication systems, for example, a long term evolution (long term evolution, LTE) system, an NR system, and a next-generation communication system. This is not limited herein.

A terminal device in embodiments of this application may be a device having a wireless transceiver function or a chip that can be disposed in any device, or may also be referred to as user equipment (user equipment, UE), an access terminal, a subscriber unit, a subscriber station, a mobile station, a mobile console, a remote station, a remote terminal, a mobile device, a user terminal, a wireless communication device, a user agent, or a user apparatus. The terminal device in embodiments of this application may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), or the like.

In embodiments of this application, a network device may be a radio access device in various standards, for example, may be a next generation NodeB (next Generation NodeB, gNB) in an NR system, an evolved NodeB (evolved NodeB, eNB), a radio network controller (radio network controller, RNC) or a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission reception point, TRP, or transmission point, TP), or the like, or may be a gNB or a transmission point in a 5G (NR) system, or one or a group of antenna panels (including a plurality of antenna panels) of a base station in the 5G system. The base station in the 5G system may also be referred to as a transmission reception point (transmission reception point, TRP) or a next generation NodeB (next generation NodeB, gNB or gNodeB). The base station in embodiments of this application may be an integrated base station, or may be a base station including a central unit (central unit, CU) and a distributed unit (distributed unit, DU). The base station including the CU and the DU may also be referred to as a base station in which the CU and the DU are separated. For example, the base station includes a gNB-CU and a gNB-DU. The CU may be further separated into a CU control plane (CU control plane, CU-CP) and a CU user plane (CU user plane, CU-CP). For example, the base station includes a gNB-CU-CP, a gNB-CU-UP, and a gNB-DU.

In embodiments of this application, an apparatus configured to implement a function of the network device may be a network device, or may be an apparatus that can support the network device in implementing the function, for example, a chip system. The apparatus may be mounted in the network device or used in a matching manner with the network device. In the following embodiments, the technical solutions provided in embodiments of this application are described by using an example in which an apparatus configured to implement a function of a network device is a network device, and the network device is a base station.

To support a machine learning function in a wireless network, a dedicated artificial intelligence (artificial intelligence, AI) AI network element or module may be further introduced in the network. If an AI network element is introduced, the AI network element corresponds to an independent network element. If an AI module is introduced, the AI module may be located in a network element, and the corresponding network element may be a gNB, UE, or the like.

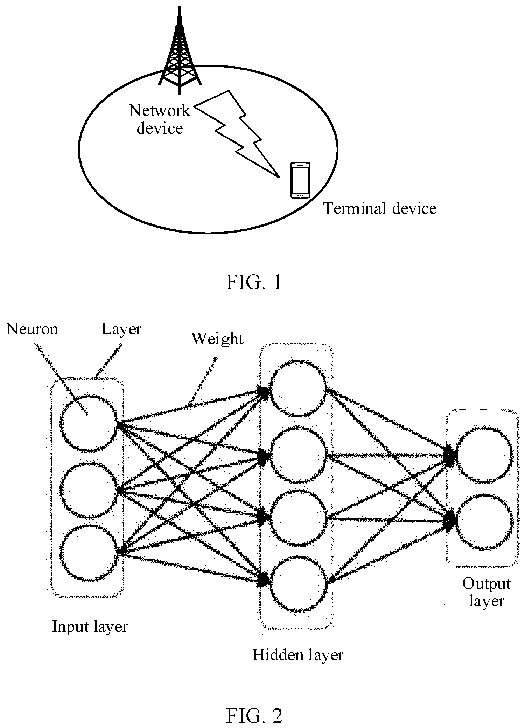

For ease of understanding embodiments of this application, a communication system shown in FIG. 1 is first used as an example to describe in detail a communication system applicable to embodiments of this application. FIG. 1 is a schematic diagram of an architecture of a communication system that may be applied to an embodiment of this application. The communication system includes a network device and a terminal device. The terminal device may access the network device and communicate with the network device. FIG. 1 is merely a schematic diagram. Quantities of network devices and terminal devices included in the communication system are not limited in this embodiment of this application. Optionally, the communication system may further include a node configured to implement an AI function. The node may communicate with the network device. Alternatively, the node may be located in the network device, and is a module in the network device.

Currently, a method for feeding back downlink CSI by a terminal device includes: A network device sends a downlink reference signal to the terminal device, and the terminal device performs channel estimation based on the downlink reference signal; selects, from a predefined codebook based on a channel estimation result, precoding that most matches a channel; and feeds back information about the selected precoding to the network device. The precoding information is a precoding matrix indicator (precoding matrix indicator, PMI). In addition, the terminal device may further indicate, by feeding back a channel quality indicator (channel quality indicator, CQI), a modulation and coding scheme that can be supported by a current channel and that is determined by the terminal device, and indicate, by feeding back a rank indicator (rank indicator, RI), a quantity of downlink transmission layers recommended by the terminal device, and the like. Feedback information such as a PMI, a CQI, and an RI may all be used to represent the downlink CSI.

If the downlink CSI obtained by the network device is more accurate, scheduled downlink transmission can match a current downlink channel, and downlink transmission performance is better. However, in an existing wideband multi-antenna system, complete CSI is usually large. To reduce CSI feedback overheads, operations such as compression and quantization are usually performed on the CSI. This causes a loss in CSI accuracy. CSI feedback requires a tradeoff between feedback overheads and feedback accuracy.

Because a neural network (neural network, NN) technology can perform self-learning, in this application, compressed CSI can be recovered based on the neural network technology. The neural network is a specific implementation form of machine learning. According to the universal approximation theorem, the neural network can approximate any continuous function in theory, so that the neural network can learn any mapping. Therefore, the neural network can accurately perform abstract modeling on a complex high-dimensional problem. The idea of the neural network comes from a neuron structure of the brain. Each neuron performs a weighted summation operation on an input value of the neuron, and outputs a result of the weighted summation through an activation function.

The neural network generally includes a multi-layer structure, and each layer may include one or more neurons. Increasing depth and/or width of the neural network can improve expressive power of the neural network, and provide more powerful information extraction and abstract modeling capabilities for a complex system. The depth of the neural network may indicate a quantity of layers included in the neural network, and a quantity of neurons included in each layer may be referred to as the width of the layer. FIG. 2 is a schematic diagram of a layer relationship of a neural network. In an implementation, the neural network includes an input layer and an output layer. The input layer of the neural network performs neuron processing on a received input, and then transfers a result to the output layer, and the output layer obtains an output result of the neural network. In another implementation, the neural network includes an input layer, a hidden layer, and an output layer. The input layer of the neural network performs neuron processing on a received input, and then transfers a result to an intermediate hidden layer. The hidden layer then transfers a calculation result to the output layer or an adjacent hidden layer. Finally, the output layer obtains an output result of the neural network. One neural network may include one or more hidden layers that are sequentially connected. This is not limited. In a training process of the neural network, a loss function may be defined. The loss function describes a gap or a difference between an output value of the neural network and an ideal target value. A specific form of the loss function is not limited in this application. A training process of the neural network is a process of adjusting a neural network parameter, such as a quantity of layers and a width of the neural network, a weight of a neuron, a parameter in an activation function of the neuron, and/or the like, so that a value of the loss function is less than a threshold or meets a target requirement.

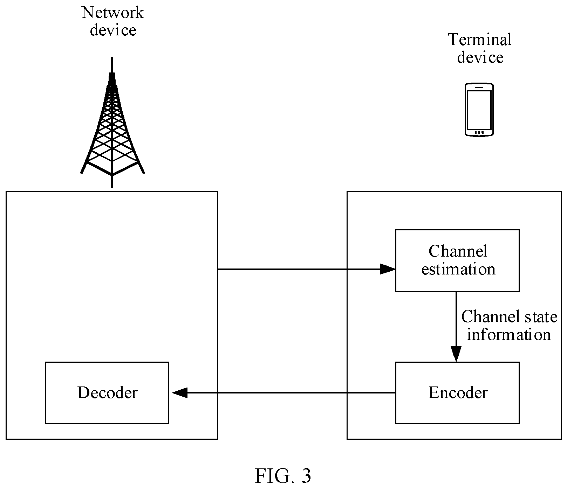

FIG. 3 is a schematic diagram of an AI network structure applicable to an embodiment of this application. The AI network structure shown in FIG. 3 is a neural network based on an autoencoder (autoencoder, AE). An encoder (encoder) and a decoder (decoder) are different neural networks. In this embodiment of this application, the encoder of the autoencoder may be deployed on a terminal device side, and the decoder may be deployed on a network device side or the decoder may be independent of the network device. After training the encoder and the decoder, the network device may send a downlink reference signal to the terminal device. The terminal device performs channel estimation on the downlink reference signal, to obtain channel state information. The encoder in the terminal device compresses the channel state information, and the terminal device sends the compressed channel state information to the decoder. The decoder is configured to recover the compressed channel information, and train the autoencoder by using plenty of channel samples, so that a difference between channel state information output by the decoder and channel information input by the encoder is small enough.

In this embodiment of this application, the neural network is a mathematical model for simulating behavior features of an animal neural network to perform distributed parallel information processing, and is a special form of an AI model.

In embodiments of this application, if there is no special description or logic conflict, terms and/or descriptions between different embodiments are consistent and may be mutually referenced, and technical features in different embodiments may be combined to form a new embodiment based on an internal logical relationship of the different embodiments.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined according to functions and internal logic of the processes.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Embodiments of this application relate to model training, model deployment, and model application of a neural network. Data needs to be collected for model training of the neural network, and collected sample data is used for model training. A data collection subject may be an AI network element, an AI module, or a dedicated data collection network element or module. In this embodiment of this application, the network device trains a neural network model by using a sparse uplink channel state matrix and a complete uplink channel state matrix, and collected data is {sparse uplink channel state matrix, uplink channel state matrix}, where the sparse uplink channel state matrix may be used as a training sample, and the uplink channel state matrix may be used as a sample label. For ease of description, in this application, a complete uplink channel state matrix is referred to as an uplink channel state matrix for short.

In this embodiment of this application, the training sample is data input into the neural network when the neural network is trained, and the sample label is an expected output value when the sample is input into the neural network, and may be understood as a real value corresponding to the training sample. An objective of training the neural network is to input a training sample into the neural network, and an output is as close as possible to the sample label.

In this embodiment of this application, a specific data collection method is as follows: A terminal device sends an uplink reference signal, for example, a sounding reference signal (sounding reference signal, SRS). A network device performs channel estimation based on the received uplink reference signal, to obtain an uplink channel state matrix, and then extracts some elements from the uplink channel state matrix based on a predetermined sparse pattern, to obtain a sparse uplink channel state matrix. The sparse uplink channel state matrix and the uplink channel state matrix corresponding to the sparse uplink channel state matrix may be used as training data. A plurality of pieces of training data need to be collected in a data collection phase, and a quantity of collected samples may be determined based on an actual situation. This is not limited in this application.

In this embodiment of this application, for ease of description, a downlink reference signal sent by the network device to the terminal device is referred to as a first reference signal, an uplink reference signal sent by the terminal device to the network device is referred to as a second reference signal, a downlink channel state matrix determined based on the first reference signal is referred to as a first channel state matrix, a sparse downlink channel matrix corresponding to the downlink channel state matrix is referred to as a sparse channel state matrix, a matrix obtained by processing the sparse channel state matrix through a neural network is referred to as a second channel state matrix, and an uplink channel state matrix determined by the network device based on the second reference signal is referred to as a third channel state matrix.

In this embodiment of this application, dimensions of the uplink channel state matrix include at least one dimension of f a transmit antenna of the terminal device, a receiving antenna of the network device, frequency domain, and time domain}. If a length of a dimension is 1, it may also be considered that the dimension does not exist. A granularity in the frequency domain dimension is a frequency domain unit, for example, may be a subcarrier or a resource block (resource block, RB), and a granularity in the time domain dimension is a time domain unit, for example, may be an orthogonal frequency-division multiplexing (orthogonal frequency-division multiplexing, OFDM) symbol or a slot. Dimensions of the downlink channel state matrix include at least one dimension of {a receiving antenna of the terminal device, a transmit antenna of the network device, frequency domain, and time domain}.

A dimension of the uplink channel state matrix is the same as a dimension of resources corresponding to an uplink reference signal. However, the uplink channel state matrix is a matrix determined by channel estimation, and is not completely the same as resources for actually sending the uplink reference signal in each dimension. In other words, specific value ranges of the uplink channel state matrix and the resources corresponding to the uplink reference signal may be the same or may be different in each dimension. For example, a range of the resources corresponding to the uplink reference signal in a frequency domain dimension is 0 to 6 RBs, but a range of the uplink channel state matrix in a frequency domain dimension may be 0 to 10 RBs. For another example, the resources corresponding to the uplink reference signal include two antennas in a transmit antenna dimension of the terminal device, but a specific quantity of antennas included in the uplink channel state matrix in a transmit antenna dimension of the terminal device is not limited. The dimensions of resources corresponding to the uplink reference signal include dimensions such as an antenna for sending the uplink reference signal, an antenna for receiving the uplink reference signal, a time domain, and a frequency domain.

Similarly, a dimension of the downlink channel state matrix is the same as a dimension of resources corresponding to a downlink reference signal, but specific value ranges in each dimension may be the same or may be different. The dimensions of resources corresponding to the downlink reference signal include dimensions such as an antenna for sending the downlink reference signal, an antenna for receiving the downlink reference signal, a time domain, and a frequency domain.

For ease of description, in the following description, both a transmit antenna and a receiving antenna are collectively referred to as an antenna.

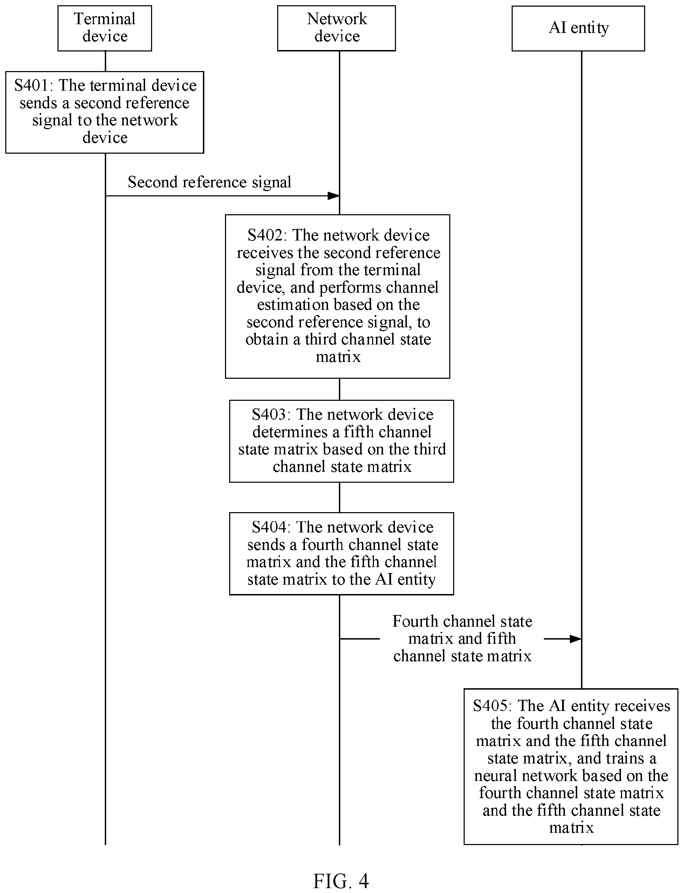

FIG. 4 is a schematic diagram of a model training procedure of a neural network according to an embodiment of this application. This procedure involves interaction between a terminal device, a network device, and an AI entity. The AI entity may be an independent network element, or may be a module in another device, for example, a module in the network device.

S401: The terminal device sends a second reference signal to the network device.

The terminal device may send a plurality of second reference signals to the network device, and a specific quantity of second reference signals is not limited. The second reference signal is an uplink reference signal, for example, may be an SRS. A specific type is not limited.

In this embodiment of this application, the second reference signal may be used to train a neural network corresponding to a first sparse pattern.

S402: The network device receives the second reference signal from the terminal device, and performs channel estimation based on the second reference signal, to obtain a third channel state matrix.

As described above, the third channel state matrix is also an uplink channel state matrix.

In this embodiment of this application, the network device may perform channel estimation on the second reference signal, to obtain second channel state information. The second channel state information may indicate a channel response of an uplink channel between the network device and the terminal device. The second channel state information may be a multi-dimensional matrix, that is, an uplink channel state matrix.

In this embodiment of this application, dimensions of the uplink channel state matrix corresponding to the channel response of the uplink channel, that is, the third channel state matrix, may include at least one dimension of {a transmit antenna of the terminal device, a receiving antenna of the network device, frequency domain, and time domain}, or include at least one dimension of {an antenna port of the terminal device, an antenna port of the network device, frequency domain, and time domain}, or may be other dimensions. The antenna port of the terminal device is an antenna port for sending the second reference signal, and the antenna port of the network device is an antenna port for receiving the second reference signal. Therefore, in this embodiment of this application, the uplink channel state matrix, that is, the third channel state matrix, may be a multi-dimensional matrix.

In addition, in this embodiment of this application, a method for performing channel estimation by the network device based on the second reference signal to obtain the third channel state matrix is not limited, and may be a conventional channel estimation algorithm, for example, a minimum mean square error estimation (minimum mean square error estimation, MMSE) algorithm, or may be a neural network-based channel estimation algorithm.

S403: The network device determines a fifth channel state matrix based on the third channel state matrix.

In this embodiment of this application, to obtain accurate training data, dimension conversion may be performed on the third channel state matrix, to obtain the fourth channel state matrix. The dimension conversion indicates to perform an operation on the third channel state matrix, so that a dimension of the third channel state matrix matches a dimension of the downlink channel state matrix and a length of each dimension.

A dimension of the fourth channel state matrix corresponds to a dimension of the downlink channel state matrix To be specific, an antenna dimension of the terminal device in the fourth channel state matrix corresponds to an antenna dimension of the terminal device in the downlink channel state matrix, an antenna dimension of the network device corresponds to an antenna dimension of the network device in the downlink channel state matrix, a frequency domain dimension corresponds to a frequency domain dimension, and a time domain dimension corresponds to a time domain dimension. For example, an order of dimensions of the fourth channel state matrix is successively an antenna of the terminal device, an antenna of the network device, frequency domain, and time domain. If an order of dimensions of the downlink channel state matrix is successively an antenna of the terminal device, an antenna of the network device, frequency domain, and time domain, the dimensions of the fourth channel state matrix correspond to the dimensions of the downlink channel state matrix. If the dimensions of the downlink channel state matrix are in another order, the dimensions of the fourth channel state matrix do not correspond to the dimensions of the downlink channel state matrix.

When the dimensions of the fourth channel state matrix correspond to the dimensions of the downlink channel state matrix, the fourth channel state matrix and the downlink channel state matrix have a same length in each dimension. To be specific, a length of the fourth channel state matrix in the antenna dimension of the terminal device is equal to a length of the downlink channel state matrix in the antenna dimension of the terminal device; a length of the fourth channel state matrix in the antenna dimension of the network device is equal to a length of the downlink channel state matrix in the antenna dimension of the network device; a length of the fourth channel state matrix in the frequency domain dimension is equal to a length of the downlink channel state matrix in the frequency domain dimension; and a length of the fourth channel state matrix in the time domain dimension is equal to a length of the downlink channel state matrix in the time domain dimension.

The network device may extract some elements from the fourth channel state matrix based on a first sparse pattern, to obtain a sparse uplink channel state matrix (which may also be referred to as a fifth channel state matrix), where the sparse uplink channel state matrix includes some elements extracted from the fourth channel state matrix. In other words, the first sparse pattern may be used to extract some elements from the fourth channel state matrix, to obtain the fifth channel state matrix.

The first sparse pattern is determined by the network device in advance. In this embodiment of this application, the third channel state matrix is used to train the neural network, and the neural network is used for recovery of the downlink channel state matrix. Therefore, the terminal device also uses the first sparse pattern in a channel state matrix feedback phase, which is the same as the first sparse pattern used by the network device.

In a possible implementation, the first sparse pattern may indicate an index of an element extracted from at least one dimension of an uplink channel state matrix (the third channel state matrix) or a downlink channel state matrix (a matrix obtained after the terminal device performs channel estimation based on the downlink reference signal). For example, when the first sparse pattern is used to extract an element in at least one dimension of the fourth channel state matrix, the first sparse pattern may indicate at least one of an index of at least one antenna in the antenna dimension of the network device, an index of at least one antenna in the antenna dimension of the terminal device, an index of at least one frequency domain unit in the frequency domain dimension corresponding to the second reference signal, and an index of at least one time domain unit in the time domain dimension corresponding to the second reference signal.

For example, when the terminal device sends the second reference signal, a quantity of antennas used by the terminal device is $N_T^{UE}=4$, when the network device receives the second reference signal, a quantity of antennas used by the network device is $N_R^{BS}=64$, a quantity of frequency domain units corresponding to the second reference signal is Nsc=120, and a quantity of time domain units corresponding to the second reference signal is 1. In this case, the fourth channel state matrix is a 3-dimensional matrix of $4\times64\times120$. For example, the first sparse pattern may be {indexes of antennas of the terminal device: 1, 3; indexes of antennas of the network device: 1, 5, 11, ..., 61; and indexes of frequency domain units: 1, 21, ..., 101}, where the indexes of the antennas of the terminal device represent antennas whose indexes are 1 and 3; the indexes of the antennas of the network device represent antennas whose indexes are 1, 5, 11, ..., 2n-1, ..., 61, where n is a positive integer; and the indexes of the frequency domain units represent frequency domain units whose indexes are 1, 21, ..., 20m+1, ..., 101, where m is an integer greater than or equal to 0. The first sparse pattern may be used to extract elements corresponding to the antennas whose indexes are 1 and 3 in the fourth channel state matrix, extract elements corresponding to the antennas whose indexes are 1, 5, 11, ..., and 61 in the fourth channel state matrix, and extract elements corresponding to subcarriers whose indexes are 1, 21, ..., and 101 in the fourth channel state matrix, where the elements extracted from the fourth channel state matrix form the fifth channel state matrix, that is, a sparse uplink channel state matrix. In this case, the sparse uplink channel state matrix is a 3-dimensional matrix of $2\times13\times6$.

S404: The network device sends the fourth channel state matrix and the fifth channel state matrix to the AI entity.

In another possible implementation, the network device may send the third channel state matrix and the fifth channel state matrix.

S405: The AI entity receives the fourth channel state matrix and the fifth channel state matrix, and trains the neural network based on the fourth channel state matrix and the fifth channel state matrix.

The fifth channel state matrix may be used as a training sample in the training data, that is, data input into the neural network during training of the neural network. The fourth channel state matrix may be used as a sample label in the training data, that is, an expected output value when the sample is input into the neural network, and may be understood as a real value corresponding to the training sample. An objective of training the neural network is to input the fourth channel state matrix into the neural network, and an output is as close as possible to the fifth channel state matrix.

In the foregoing procedure, an example in which the AI entity and the network device are independent of each other is used for description. The AI entity may alternatively be a module of the network device. If the AI entity is a module of the network device, that is, the AI entity is a part of the network device, the network device may not send the fourth channel state matrix and the fifth channel state matrix. The fourth channel state matrix and the fifth channel state matrix may be internally transferred to the AI entity in the network device.

In a possible implementation, a fourth channel state matrix and a fifth channel state matrix corresponding to the fourth channel state matrix may be used as one piece of training data. The AI entity may obtain a plurality of pieces of training data, and a specific quantity of the training data is not limited.

In another possible implementation, a third channel state matrix and a fifth channel state matrix corresponding to the third channel state matrix may be used as one piece of training data, and the AI entity converts the third channel state matrix into the fourth channel state matrix. In this case, the training data obtained by the AI entity is the third channel state matrix and the fifth channel state matrix.

According to the foregoing procedure, the network device may obtain a plurality of pieces of training data used to train the neural network, and the plurality of pieces of training data may form a dataset. In this embodiment of this application, in an implementation, different training datasets may be used for different network deployment environments. For example, a factory environment uses one dataset, and an office environment uses another dataset, or training data corresponding to each terminal device forms one dataset, or training data corresponding to each sparse pattern forms one dataset, and different AI models are obtained through training based on different datasets. In another implementation, the collected training data is first clustered, similar training data forms a new dataset, and model training is performed by using the new dataset. The collected dataset may include uplink channel state matrices corresponding to second reference signals sent by the terminal device at different geographical locations.

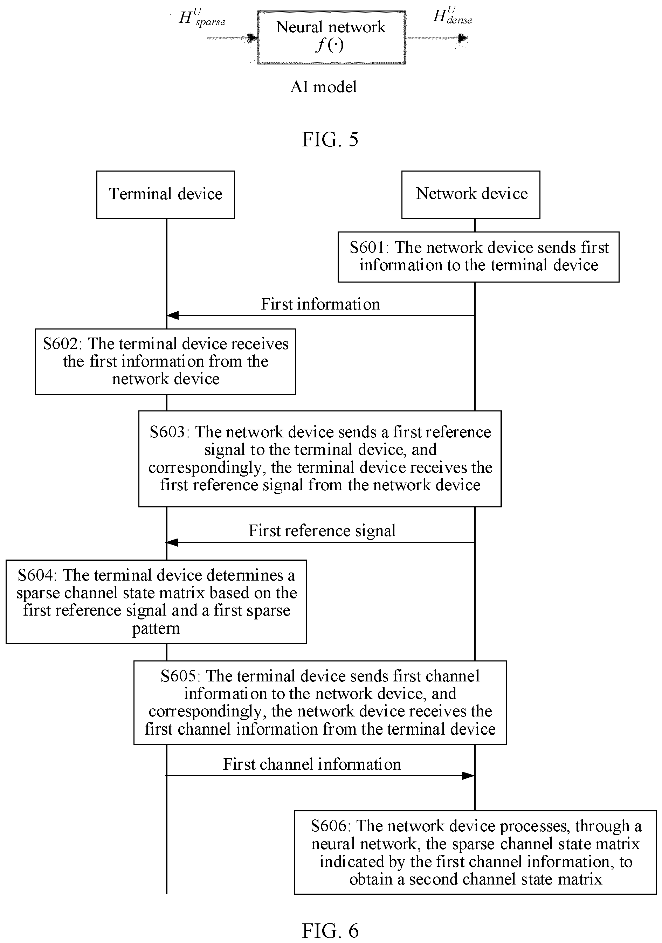

In this embodiment of this application, after obtaining the training data, the AI entity may select a proper AI model, and train the AI model by using the training data. A specific structure of the AI model is not limited. For example, FIG. 5 is a schematic diagram of an AI model according to an embodiment of this application.

An input of a neural network in the AI model is a sparse uplink channel state matrix $H_{sparse}^{U}$, and an output of the neural network is a recovered uplink channel state matrix $H_{dense}^{U}$. The neural network may be considered as a mapping function from $H_{sparse}^{U}$ to $H_{dense}^{U}$, that is, $H_{dense}^{U} = f(H_{sparse}^{U})$. An objective of training the neural network is to expect that an output of $H_{dense}^{U}$ is as close as possible to a complete uplink channel state matrix $H_{dense}^{U,label}$ corresponding to the input sparse uplink channel state matrix. A loss function needs to be defined for training the neural network. Selection of the loss function is related to an objective of a task. Common loss functions include a mean square error, a cross entropy (cross entropy), and the like. For example, the loss function in this embodiment of this application may be a mean square error between a recovered uplink channel state matrix and a complete uplink channel state matrix, that is,

$$\text{Loss} = \text{MSE}(f(H_{sparse}^{U}), H_{dense}^{U,label}) = \frac{1}{N} \left\| f(H_{sparse}^{U}) - H_{dense}^{U,label} \right\|^2$$

, where N is a quantity of elements included in the matrix $H_{dense}^{U,label}$.

A specific training procedure of the AI model is not limited in this embodiment of this application. For example, training may be performed by using a random gradient descent method, or training may be performed by using an iterative algorithm, to obtain an optimal neural network parameter. When new training data is obtained, the AI model may be further updated. The AI model may be updated periodically. For example, the AI entity obtains a new dataset at a specific interval, and updates the AI model based on the dataset. Alternatively, the update of the AI model may be triggered by an event, and when an output error exceeds a threshold, the AI model is updated based on a latest dataset.

When selecting an AI model, a tradeoff between complexity and performance is further considered. A neural network is used as an example. When there is plenty of training data, more layers and neurons of the neural network indicate higher complexity and better performance of the AI model. If the training data is fixed, the AI model may have too many parameters and overfitting may occur. That is, the model has good performance in a training set but poor performance in a test set. Therefore, the AI model needs to be selected based on an actual application scenario. For a network device with powerful computing capabilities, for example, a macro base station, an AI model with more parameters may be used. For a network device with poor computing capabilities, for example, a small cell or a micro base station, an AI model with fewer parameters may be used.

In this embodiment of this application, the network device may train a plurality of neural networks for different sparse patterns. For example, if the network device predetermines three sparse patterns, the network device separately trains neural networks for each sparse pattern, to obtain three neural networks. In other words, there is a correspondence between the neural networks and the sparse patterns. The network device may select, based on an actual situation, one of the neural networks to perform downlink CSI recovery.

In the foregoing procedure, the network device performs channel estimation on the received second reference signal, to obtain the third channel state matrix, and converts the third channel state matrix into the fourth channel state matrix. Then, element extraction is performed on the fourth channel state matrix in at least one dimension by using the first sparse pattern, to obtain the fifth channel state matrix. The fifth channel state matrix includes the elements extracted from the fourth channel state matrix. In other words, the fourth channel state matrix is compressed by using the first sparse pattern. The fifth channel state matrix may be considered as a matrix obtained after the fourth channel state matrix is compressed. Further, the neural network is trained by using the fourth channel state matrix and the fifth channel state matrix, so that a difference between the fourth channel state matrix and a channel state matrix obtained after the neural network performs recovery processing on the fifth channel state matrix is small enough. For example, a mean square error between the channel state matrix and the fourth channel state matrix is less than a preset value, that is, the recovered channel state matrix is close to the fourth channel state matrix.

In this embodiment of this application, after the neural network in the AI model is trained by using the first sparse pattern, the downlink channel state matrix may be recovered on the downlink channel through the neural network. Specifically, the terminal device may perform channel estimation on the received downlink reference signal, to obtain the downlink channel state matrix. Then, the terminal device performs element extraction on the downlink channel state matrix in at least one dimension by using the first sparse pattern, to obtain a sparse downlink channel state matrix, where the sparse downlink channel state matrix may be considered as a matrix obtained after the downlink channel state matrix is compressed. Further, the terminal device sends the sparse downlink channel state matrix to the network device. After obtaining the sparse downlink channel state matrix, the network device may perform recovery processing on the sparse downlink channel state matrix by using a trained neural network, to obtain a recovered downlink channel state matrix A difference between the recovered downlink channel state matrix and a downlink channel state matrix that is obtained by the terminal device through estimation is small enough. For example, a mean square error between the recovered downlink channel state matrix and the downlink channel state matrix is less than a preset value, that is, the recovered uplink channel state matrix is close to the channel state matrix obtained by the terminal device through estimation. Details are described below.

FIG. 6 is a schematic flowchart of a channel recovery method according to an embodiment of this application. The method includes the following steps.

Optionally, S601: A network device sends first information to a terminal device, where the first information indicates a first sparse pattern.

Optionally, S602: The terminal device receives the first information from the network device.

The network device may send the first information to the terminal device by using a radio resource control (radio resource control, RRC) message, a media access control (medium access control, MAC) control element (control element, CE), or downlink control information (downlink control information, DCI). This is not limited in this embodiment of this application.

In this embodiment of this application, the network device may configure a sparse pattern for the terminal device, or may configure a plurality of sparse patterns. The terminal device may select one of the plurality of sparse patterns for use, or the network device may activate one of the plurality of sparse patterns, and the terminal device uses the activated sparse pattern.

In this embodiment of this application, the first sparse pattern may indicate an index of an element extracted from at least one dimension of the downlink channel state matrix, and the downlink channel state matrix is a matrix obtained after the terminal device performs channel estimation based on the downlink reference signal. In other words, the first sparse pattern may be used for performing sampling on at least one dimension of the downlink channel state matrix.

For example, when the downlink reference signal is described as a first reference signal, and dimensions of the downlink channel state matrix include an antenna dimension of the terminal device (corresponding to an antenna for receiving the first reference signal), an antenna dimension of the network device (corresponding to an antenna for sending the first reference signal), and a frequency domain dimension corresponding to the first reference signal, the first sparse pattern may indicate at least one of an index of at least one antenna in the antenna dimension of the terminal device, an index of at least one antenna in the antenna dimension of the network device, and an index of at least one frequency domain unit in the frequency domain dimension corresponding to the first reference signal. The antenna of the network device is configured to send the first reference signal, the antenna of the terminal device is configured to receive the first reference signal, and the frequency domain unit corresponding to the first reference signal is a frequency domain unit that carries the first reference signal.

For example, when the network device sends the first reference signal, a quantity of antennas for sending is $N_T^{BS}=64$, when the terminal device receives the first reference signal, a quantity of antennas for receiving is $N_R^{US}=4$, a quantity of frequency domain units corresponding to the first reference signal in frequency domain is Nsc=120, and a quantity of time domain units corresponding to the first reference signal in time domain is 1. In this case, the downlink channel state matrix obtained by the terminal device through estimation based on the first reference signal may be a 3-dimensional matrix of $4\times64\times120$. It is assumed that the first sparse pattern indicates antennas whose indexes are 1 and 3 in receiving antennas of the terminal device, antennas whose indexes are 1, 5, 11, ..., 2n-1, ..., 61 in antennas used by the network device to send the first reference signal, and frequency domain units whose indexes are 1, 21, ..., 20m+1, ..., 101, where n is a positive integer, and m is an integer greater than or equal to 0. Therefore, according to the first sparse pattern, elements corresponding to the antennas whose indexes are 1, 5, 11, ..., and 61 in the downlink channel state matrix need to be extracted, elements corresponding to the antennas whose indexes are 1 and 3 in the downlink channel state matrix need to be extracted, and elements corresponding to the frequency domain units whose indexes are 1, 21, ..., and 101 in the downlink channel state matrix need to be extracted, where the elements extracted from the downlink channel state matrix form the sparse downlink channel state matrix. In this case, the sparse downlink channel state matrix is a 3-dimensional matrix of $2\times13\times6$.

In addition, dimensions of the uplink channel state matrix and dimensions of the downlink channel state matrix may not be completely the same. The dimensions of the uplink channel state matrix include {a transmit antenna of the terminal device, a receiving antenna of the network device, frequency domain, and time domain}, and the dimensions of the downlink channel state matrix include {a receiving antenna of the terminal device, a transmit antenna of the network device, frequency domain, and time domain}. Therefore, it needs to be ensured that a receiving configuration of the terminal device matches a transmit configuration, and a receiving configuration of the network device matches a transmit configuration. The receiving configuration includes at least one of a receiving antenna, a receiving weight, and a receiving bandwidth. The receiving weight may also be referred to as a receiving beam, receiving precoding, or a receiving spatial domain filter. The transmit configuration includes at least one of a transmit antenna, a transmit weight, or a transmit bandwidth. The transmit weight may also be referred to as a transmit beam, transmit precoding, or a transmit spatial domain filter. Configuration of the receiving antenna and the transmit antenna may be implemented by establishing a first association relationship between the transmit antenna of the terminal device and the receiving antenna of the terminal device, and/or a second association relationship between the transmit antenna of the network device and the receiving antenna of the network device. The first association relationship and the second association relationship may be predefined by using a protocol, or may be configured by the network device, or may be predefined by the device before delivery. For example, the first association relationship is determined by the terminal device based on an internal configuration of the terminal device. A transmit antenna 1 of the terminal corresponds to a receiving antenna 1, and a transmit antenna 3 corresponds to a receiving antenna 2. The terminal device may report the first association relationship to the network device, and for another example, the second association relationship is notified by the network device to the terminal device. The matching between the receiving weight and the transmit weight means that the terminal device and the network device use a same weight when receiving and sending a reference signal. The receiving bandwidth and the transmit bandwidth mean that the terminal device and the network device use a same bandwidth when receiving and sending a reference signal, or a bandwidth of an uplink channel is greater than or equal to a bandwidth of a downlink channel. When the uplink channel is used to train a neural network, a part of bandwidth may be extracted from the bandwidth of the uplink channel, so that the bandwidth of the uplink channel is equal to the bandwidth of the downlink channel after extraction.

In this embodiment of this application, for ease of description, a downlink channel state matrix is referred to as a first channel state matrix, and a sparse downlink channel matrix corresponding to the downlink channel state matrix is referred to as a sparse channel state matrix.

S603: The network device sends a first reference signal to the terminal device, and correspondingly, the terminal device receives the first reference signal from the network device.

The first reference signal may be a downlink reference signal, and the network device may send a plurality of first reference signals to the terminal device. This is not limited in this embodiment of this application.

In a possible implementation, a receiving beam used by the terminal device to receive the first reference signal is the same as a transmit beam used by the terminal device to send a second reference signal. In other words, a spatial domain filter used by the terminal device to receive the first reference signal is the same as a spatial domain filter used by the terminal device to send the second reference signal. To achieve the foregoing objective, second precoding used by the terminal device to send the second reference signal is the same as first precoding used by the terminal device to receive the first reference signal.

Similarly, a receiving beam used by the network device to receive the second reference signal is the same as a transmit beam used by the network device to send the first reference signal. In other words, third precoding used by the network device to send the first reference signal is the same as fourth precoding used by the network device to receive the second reference signal.

For example, when the terminal device sends the second reference signal, the second reference signal received by the network device may be represented as $y2 = W_{bs}^r H_{ul} W_{ue}^t s_{ul} + n$, where $W_{bs}^r$ is the fourth precoding used by the network device to receive the second reference signal; $W_{ue}^t$ is the second precoding used by the terminal device to send the second reference signal, where if $W_{bs}^r$ and $W_{ue}^t$ are a unit matrix, it indicates that no precoding is used; $H_{ul}$ is the uplink channel matrix; $s_{ul}$ is the second reference signal; n is a noise; and an uplink channel state matrix estimated by the network device based on the second reference signal is $W_{bs}^r H_{ul} W_{ue}^t$. In other words, the uplink channel state matrix used for training a neural network is an equivalent channel matrix including the precoding.

To recover the first channel state matrix by using the sparse channel state matrix, in this embodiment of this application, there may be a correlation between the sparse channel state matrix input into the neural network and $W_{bs}^r H_{ul} W_{ue}^t$. Specifically, when the network device sends the first reference signal, the first reference signal received by the terminal device may be represented as $y1 = W_{ue}^r H_{dl} W_{bs}^t s_{dl} + n$, where $W_{ue}^r$ is the first precoding used by the terminal device to receive the first reference signal, $W_{bs}^t$ is the third precoding used by the network device to send the first reference signal, $H_{dl}$ is the downlink channel matrix, $s_{dl}$ is the first reference signal, the first channel state matrix (that is, the uplink channel state matrix) estimated by the terminal device based on the first reference signal is $W_{ue}^r H_{dl} W_{bs}^t$, and there is a similar correlation between the uplink channel matrix $H_{ul}$ and the downlink channel matrix $H_{dl}$. When $W_{ue}^r = W_{ue}^t$ and $W_{bs}^t = W_{bs}^r$, there is also a correlation between $W_{ue}^r H_{dl} W_{bs}^t$ and $W_{bs}^r H_{ul} W_{ue}^t$. In other words, the second precoding is the same as the first precoding, and the third precoding is the same as the fourth precoding. To be specific, a transmit beam used by the terminal device to send the second reference signal is the same as a receiving beam used to receive the second reference signal, and a transmit beam used by the network device to send the first reference signal is the same as a receiving beam used to receive the first reference signal.

In this embodiment of this application, a method for performing channel estimation by the terminal device is not limited in this application, and may be a conventional channel estimation algorithm, for example, an MMSE algorithm, or may be a neural network-based channel estimation algorithm.

S604: The terminal device determines a sparse channel state matrix based on the first reference signal and the first sparse pattern.

In a first possible implementation, the terminal device may obtain the first channel state matrix based on the first reference signal. Specifically, the terminal device may perform channel estimation based on the first reference signal, to obtain the first channel state matrix. The first channel state information may indicate a channel response of a downlink channel between the network device and the terminal device. The first channel state information may be a multi-dimensional matrix. For example, dimensions of the first channel state matrix include at least one of an antenna dimension of the terminal device, an antenna dimension of the network device, and a subcarrier dimension corresponding to the first reference signal. The terminal device may obtain the sparse channel state matrix based on the first sparse pattern and the first channel state matrix, for example, perform extraction on the first channel state matrix based on the first sparse pattern, to obtain the sparse channel state matrix, or perform extraction on the first channel state matrix based on the first sparse pattern, and estimate an element that is not included in the first channel state matrix, to obtain the sparse channel state matrix. The sparse channel state matrix is equivalent to a matrix obtained after the first channel state matrix is compressed.

In a second possible implementation, the network device does not need to send first information to the terminal device, that is, the network device does not need to send the first sparse pattern to the terminal device. In this case, the terminal device may consider that the first channel state matrix obtained based on the first reference signal is also the sparse channel state matrix. For example, when the network device sends the first reference signal, a transmit antenna and a frequency domain resource that are used are consistent with the predetermined first sparse pattern. In this case, the terminal device estimates, based on the first reference signal, a channel on a resource corresponding to the first reference signal, and obtains the sparse channel state matrix.

In a third possible implementation, the terminal device may receive the first reference signal by using an antenna corresponding to an antenna index of the terminal device that is indicated by the first sparse pattern, and/or estimate a channel on an antenna corresponding to an antenna index of the network device that is indicated by the first sparse pattern and a channel on a frequency domain resource corresponding to a frequency domain index that is indicated by the first sparse pattern, to directly obtain the sparse channel state matrix.

For example, a frequency domain unit in frequency domain is a subcarrier. It is assumed that the first sparse pattern indicates antennas whose indexes are 1 and 3 in antennas of the terminal device, antennas whose indexes are 1, 5, 11, ..., 2n-1, ..., 61 in antennas of the network device, and subcarriers whose indexes are 1, 21, ..., 20m+1, ..., 101, where n is a positive integer, and m is an integer greater than or equal to 0. In this case, when receiving the first reference signal, the terminal device uses the antennas whose indexes are 1 and 3 and estimates channels corresponding to the subcarriers whose indexes are 1, 21, ..., 101 and the antennas whose indexes are 1, 5, 11, ..., 2n-1, ..., 61 in the network device, and the terminal device may obtain the sparse channel state matrix whose dimension is $2 \times 13 \times 6$.

In this embodiment of this application, a length of the first channel state matrix in a subcarrier dimension is equal to a length of the fourth channel state matrix in a subcarrier dimension; a length of the first channel state matrix in a receiving antenna dimension is equal to a length of the fourth channel state matrix in a transmit antenna dimension; and a length of the first channel state matrix in a transmit antenna dimension is equal to a length of the fourth channel state matrix in a receiving antenna dimension.

S605: The terminal device sends first channel information to the network device, and correspondingly, the network device receives the first channel information from the terminal device.

The first channel information indicates the sparse channel state matrix.

The first channel information may be a set of values of elements in the sparse channel state matrix, or may be in another form. This is not limited in this embodiment of this application.

S606: The network device processes, through a neural network, the sparse channel state matrix indicated by the first channel information, to obtain a second channel state matrix.

The second channel state matrix is a recovery value of the first channel state matrix, and the neural network is trained by using data obtained by performing sampling based on the first sparse pattern. For details, refer to the foregoing descriptions in the procedure shown in FIG. 4.

The network device may determine, based on the recovered second channel state matrix, parameters such as precoding and a resource that are used when the data is sent to the terminal device.

In addition, the network device needs to use a neural network to recover the first channel state matrix. Therefore, if training of the neural network is completed on the network device or on an AI module of the network device, the trained neural network does not need to be configured on the network device. If training of the neural network is completed on an independent AI network element, the trained neural network needs to be configured on the network device. A specific configuration process is not limited in this embodiment of this application. Details are not described herein again.

According to the foregoing method, when the terminal device does not need to participate in the training of the neural network, the network device can train the neural network only by using the uplink channel state matrix, and recover the complete downlink channel state matrix through the neural network and the sparse downlink channel state matrix that is fed back by the terminal device. This can reduce a requirement on a capability of the terminal device, and avoid feedback overheads caused by feeding back the complete downlink channel state matrix by the terminal device.

An embodiment of this application further provides a method that may be used by a terminal device to feed back a channel eigen matrix. The method is described in detail below. In this embodiment of this application, for ease of description, in the following description, a downlink reference signal sent by the network device to the terminal device is referred to as a first reference signal, an uplink reference signal sent by the terminal device to the network device is referred to as a second reference signal, a downlink channel state matrix determined based on the first reference signal is referred to as a first matrix, a channel eigen matrix determined based on the downlink channel state matrix is referred to as a first channel eigen matrix, and a sparse downlink channel eigen matrix corresponding to the first channel eigen matrix is referred to as a first sparse matrix. A matrix obtained by processing the first sparse matrix through the neural network is referred to as a second matrix, an uplink channel state matrix determined by the network device based on the second reference signal is referred to as a third matrix, a channel eigen matrix determined based on the uplink channel state matrix is referred to as a second channel eigen matrix, a matrix obtained after element extraction is performed on the second channel eigen matrix is referred to as a second sparse matrix, and a matrix obtained by processing the second sparse matrix through the neural network is referred to as a fourth matrix.

Dimensions of the uplink channel state matrix include at least one dimension of {a transmit antenna of the terminal device, a receiving antenna of the network device, frequency domain, and time domain}. If a length of a dimension is 1, it may also be considered that the dimension does not exist. A granularity in the frequency domain may be a subcarrier or an RB, and a granularity in the time domain may be an OFDM symbol or a slot. Dimensions of the downlink channel state matrix include at least one dimension of {a receiving antenna of the terminal device, a transmit antenna of the network device, frequency domain, and time domain}.

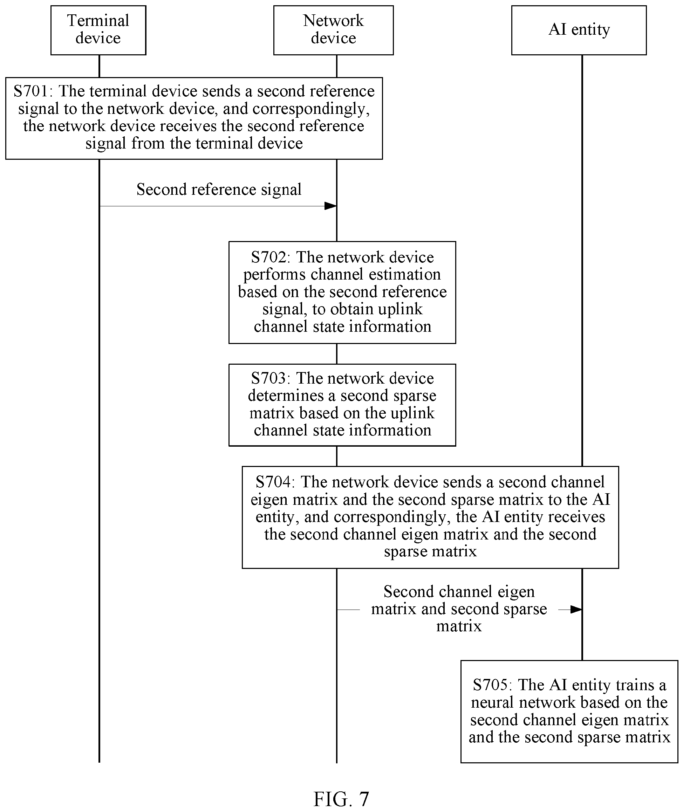

FIG. 7 is a schematic diagram of a model training procedure of a neural network according to an embodiment of this application. This procedure involves interaction between a terminal device, a network device, and an AI entity. The AI entity may be an independent network element, or may be located in the network device.

In the procedure shown in FIG. 7, a specific data collection method is as follows: The terminal device sends a second reference signal, for example, an SRS, and the network device performs channel estimation based on the received second reference signal, to obtain a third matrix A second channel eigen matrix is obtained based on the third matrix, and then some elements are extracted from the second channel eigen matrix based on a predetermined second sparse pattern, to obtain a second sparse matrix The second sparse matrix and the second channel eigen matrix may be used as one piece of training data. A plurality of pieces of training data need to be collected in a data collection phase, and a quantity of collected samples may be determined based on an actual situation. This is not limited in this application.

S701: The terminal device sends a second reference signal to the network device, and correspondingly, the network device receives the second reference signal from the terminal device.

The terminal device may send a plurality of second reference signals to the network device, and a specific quantity of second reference signals is not limited. The second reference signal is an uplink reference signal, for example, may be an SRS. A specific type is not limited.

S702: The network device performs channel estimation based on the second reference signal, to obtain uplink channel state information.

The network device may obtain the uplink channel state information by performing channel estimation on each second reference signal. The uplink channel state information may indicate a channel response of an uplink channel between the network device and the terminal device. Dimensions of the uplink channel state information may include at least one dimension of {a transmit antenna of the terminal device, a receiving antenna of the network device, frequency domain, and time domain}. For an uplink channel, the antenna of the network device is a receiving antenna for receiving the second reference signal, and the subcarrier is a subcarrier corresponding to the second reference signal.

For example, when the network device receives the second reference signal, a quantity of receiving antennas used by the network device is $N_R^{BS}$=64, and a quantity of subcarriers corresponding to the second reference signal is Nsc=120. In this case, a third matrix is a 2-dimensional matrix of 64×120.

S703: The network device determines a second sparse matrix based on the uplink channel state information.

Specifically, an example in which the uplink channel state information is an uplink channel state matrix is used. The network device may determine a second spatial domain covariance matrix based on the uplink channel state information.

The second spatial domain covariance matrix may be obtained through calculation by using one uplink channel. For example, the second spatial domain covariance matrix may meet the following form:

$$R_i = H_i H_i^H$$ , where

$R_i$ represents a spatial domain covariance matrix corresponding to each terminal antenna, frequency domain unit, and time domain unit, and $H_i$ represents a channel vector corresponding to each terminal antenna, frequency domain unit, and time domain unit. When a dimension of the uplink channel state information is a*b*c*network device antenna, a dimension of the obtained second spatial domain covariance matrix is a*b*c*network device antenna*network device antenna. Alternatively, the second spatial domain covariance matrix may average dimensions other than the network device antenna. For example, if the second spatial domain covariance matrix averages the dimension b, a dimension of the obtained second spatial domain covariance matrix is a*c*network device antenna*network device antenna. For another example, if the second spatial domain covariance matrix averages the dimensions a, b, and c, a dimension of the obtained second spatial domain covariance matrix is network device antenna*network device antenna.

Alternatively, the second spatial covariance matrix may be obtained through calculation by using a plurality of uplink channel state matrices. For example, the second spatial covariance matrix is obtained by averaging spatial covariance matrices of a plurality of uplink channel state matrices in a period of time. This is not limited in this embodiment of this application.

The network device may perform eigenvalue decomposition (eigenvalue decomposition, EVD) on the second spatial domain covariance matrix, to obtain the second channel eigen matrix, or may directly perform singular value decomposition (singular value decomposition, SVD) on the uplink channel state matrix, to obtain the second channel eigen matrix. When eigenvectors corresponding to all eigenvalues (or singular values) are reserved, dimensions of the second channel eigen matrix may be a receiving antenna of the network device*a receiving antenna of the network device, or may further include at least one dimension of {a transmit antenna of the terminal device, frequency domain, and time domain}. When only eigenvectors corresponding to n largest eigenvalues (or singular values) are reserved, the dimensions of the second channel eigen matrix may be a receiving antenna of the network device*n, or may further include at least one dimension of {a transmit antenna of the terminal device, frequency domain, and time domain}.

Further, the network device may extract some elements from the second channel eigen matrix based on a second sparse pattern, to obtain a second sparse matrix, where the second sparse matrix includes some elements extracted from the second channel eigen matrix. In other words, the second sparse pattern may be used to extract some elements from the second channel eigen matrix, to obtain the second sparse matrix.

The second sparse pattern is determined by the network device in advance, and the second sparse pattern is also used in a channel state matrix feedback phase of the terminal device, which is the same as the second sparse pattern used by the network device.

In a possible implementation, when the second sparse pattern is used to extract an element in at least one dimension of the second channel eigen matrix, the second sparse pattern may indicate at least one of an index of at least one antenna in the antenna dimension of the network device, an index of at least one antenna in the antenna dimension of the terminal device, an index of at least one frequency domain unit in the frequency domain dimension corresponding to the second reference signal, and an index of at least one time domain unit in the time domain dimension corresponding to the second reference signal.

For example, when the network device receives the second reference signal, a quantity of antennas used by the network device is $N_R^{BS}$=64, and a quantity of frequency domain units corresponding to the second reference signal in frequency domain is Nsc=120. When the terminal device sends the second reference signal, a quantity of antennas used by the terminal device is 1, and a quantity of time domain units corresponding to the second reference signal in time domain is 1. In this case, the uplink channel state matrix corresponding to the uplink channel state information is a 2-dimensional matrix of 64×120. The second spatial domain covariance matrix determined based on the uplink channel state matrix is also a 2-dimensional matrix of 64×120. Similarly, the second channel eigen matrix determined based on the second spatial domain covariance matrix is also a 2-dimensional matrix of 64×120. The second sparse pattern indicates antennas whose indexes are 1, 5, 11, ..., 2n-1, ..., 61 in the network device, where n is a positive integer, and the second sparse pattern indicates frequency domain units whose indexes are 1, 21, ..., 20m+1, .., 101, where m is an integer greater than or equal to 0. In this case, the second sparse pattern may be used to extract elements corresponding to the antennas whose indexes are 1, 5, 11, ..., and 61 in the second channel eigen matrix, extract elements corresponding to the frequency domain units whose indexes are 1, 21, ..., and 101 in the third matrix, and extract elements from the second channel eigen matrix, to form the second sparse matrix. In this case, the second sparse matrix is a 2-dimensional matrix of 13×6.

S704: The network device sends the second channel eigen matrix and the second sparse matrix to the AI entity, and correspondingly, the AI entity receives the second channel eigen matrix and the second sparse matrix.

S705: The AI entity trains a neural network based on the second channel eigen matrix and the second sparse matrix.

In the foregoing procedure, an example in which the AI entity and the network device are independent of each other is used for description. The AI entity may alternatively be a module of the network device. If the AI entity is a module of the network device, that is, the AI entity is a part of the network device, the network device may not send the second channel eigen matrix and the second sparse matrix. The second channel eigen matrix and the second sparse matrix may be internally transferred to the AI entity in the network device.

A second channel eigen matrix and a second sparse matrix corresponding to the second channel eigen matrix may be used as one piece of training data. The AI entity may obtain a plurality of pieces of training data, and a specific quantity of the training data is not limited. The second sparse matrix may be used as a training sample in the training data, that is, data input into the neural network during training of the neural network. The second channel eigen matrix may be used as a sample label in the training data, that is, an expected output value when the sample is input into the neural network, and may be understood as a real value corresponding to the training sample. An objective of training the neural network is to input the second sparse matrix into the neural network, and an output is as close as possible to the second channel eigen matrix.

According to the foregoing procedure, the network device may obtain a plurality of pieces of training data used to train the neural network, and the plurality of pieces of training data may form a dataset. In this embodiment of this application, in an implementation, different training datasets may be used for different network deployment environments. For example, a factory environment uses one dataset, and an office environment uses another dataset, or training data corresponding to each terminal device forms one dataset, or training data corresponding to each sparse pattern forms one dataset, and different AI models are obtained through training based on different datasets. In another implementation, the collected training data is first clustered, similar training data forms a new dataset, and model training is performed by using the new dataset. The collected dataset may include uplink channel state matrices corresponding to second reference signals sent by the terminal device at different geographical locations.

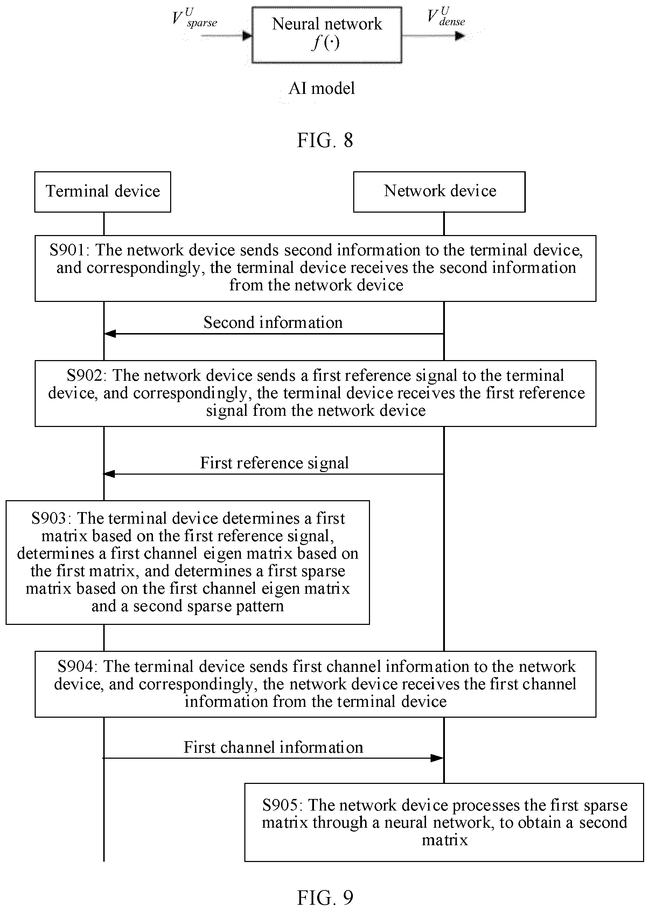

In this embodiment of this application, after obtaining the training data, the AI entity may select a proper AI model, and train the AI model by using the training data. A specific structure of the AI model is not limited. For example, FIG. 8 is a schematic diagram of an AI model according to an embodiment of this application.

The second sparse matrix input into the neural network is $V_{sparse}^U$, and the fourth matrix output by the neural network is $V_{dense}^U$. The neural network may be considered as a mapping function from $V_{sparse}^U$ to $V_{dense}^U$, that is, $V_{dense}^U = f(V_{sparse}^U)$. An objective of training the neural network is to expect that an output $V_{dense}^U$ is as close as possible to an actual second channel eigen matrix $V_{dense}^{U,label}$. In this embodiment of this application, a loss function may be defined for training the neural network. The loss function may be a mean square error between the output fourth matrix and the actual second channel eigen matrix, that is, $\text{Loss} = \text{MSE}(f(V_{sparse}^{U}), V_{dense}^{U,label}) = \frac{1}{N} \left\| f(V_{sparse}^{U}) - V_{dense}^{U,label} \right\|^2$, where N is a quantity of elements included in the matrix $V_{dense}^{U,label}$.

A specific training procedure of the AI model is not limited in this embodiment of this application. For example, training may be performed by using a random gradient descent method, or training may be performed by using an iterative algorithm, to obtain an optimal neural network parameter. When new training data is obtained, the AI model may be further updated. The AI model may be updated periodically. For example, the AI entity obtains a new dataset at a specific interval, and updates the AI model based on the dataset. Alternatively, the AI model may be triggered by an event, and when an error output by the neural network exceeds a threshold, the AI model is updated based on a latest dataset.

When selecting an AI model, a tradeoff between complexity and performance is further considered. A neural network is used as an example. When there is plenty of training data, more layers and neurons of the neural network indicate higher complexity and better performance of the AI model. If the training data is fixed, the AI model may have too many parameters and overfitting may occur. That is, the model has good performance in a training set but poor performance in a test set. Therefore, the AI model needs to be selected based on an actual application scenario. For a network device with powerful computing capabilities, for example, a macro base station, an AI model with more parameters may be used. For a network device with poor computing capabilities, for example, a small cell or a micro base station, an AI model with fewer parameters may be used.

In this embodiment of this application, the network device may train a plurality of neural networks for different sparse patterns. For example, if the network device predetermines three sparse patterns, the network device separately trains neural networks for each sparse pattern, to obtain three neural networks. In other words, there is a correspondence between the neural networks and the sparse patterns. The network device may select, based on an actual situation, one of the neural networks to perform downlink CSI recovery.

In this embodiment of this application, after the neural network in the AI model is trained by using the second sparse pattern, the first channel eigen matrix may be recovered on the downlink channel through the neural network. Specifically, the terminal device may perform channel estimation on the received downlink reference signal, to obtain the first matrix. Then, the terminal device determines the first channel eigen matrix based on the first matrix, and performs element extraction on the first channel eigen matrix in at least one dimension by using the second sparse pattern, to obtain the first sparse matrix. The first sparse matrix may be considered as a matrix obtained after the first channel eigen matrix is compressed. Further, the terminal device sends the first sparse matrix to the network device. After obtaining the first sparse matrix, the network device may perform recovery processing on the first sparse matrix by using a trained neural network, to obtain the second matrix. A mean square error between the second matrix and the first channel eigen matrix that is obtained by the terminal device through estimation is less than a preset value, that is, the second matrix is close to the first channel eigen matrix. Details are described below.

FIG. 9 is a schematic flowchart of a channel recovery method according to an embodiment of this application. The method includes the following steps.

Optionally, S901: The network device sends second information to the terminal device, and correspondingly, the terminal device receives the second information from the network device.

The second information indicates the second sparse pattern.

The network device may send the second information to the terminal device by using an RRC message, a MAC CE, or DCI. This is not limited in this embodiment of this application.

In this embodiment of this application, the network device may configure a plurality of sparse patterns for the terminal device, and the terminal device may select one of the plurality of sparse patterns for use, or the network device may activate one of the plurality of sparse patterns, and the terminal device uses the activated sparse pattern.

In this embodiment of this application, the second sparse pattern may be used for performing sampling on at least one dimension of the first channel eigen matrix.

For example, when the downlink reference signal is described as a first reference signal, and dimensions of the first channel eigen matrix include an antenna dimension of the network device and a frequency domain dimension corresponding to the first reference signal, the second sparse pattern may indicate at least one of an index of at least one antenna in the antenna dimension of the network device and an index of at least one frequency domain unit in the frequency domain dimension corresponding to the first reference signal.

In addition, dimensions of the uplink channel state matrix and dimensions of the downlink channel state matrix may not be completely the same. The dimensions of the uplink channel state matrix include {a transmit antenna of the terminal device, a receiving antenna of the network device, frequency domain, and time domain}, and the dimensions of the downlink channel state matrix include {a receiving antenna of the terminal device, a transmit antenna of the network device, frequency domain, and time domain}. Therefore, it needs to be ensured that a receiving configuration of the terminal device matches a transmit configuration, and a receiving configuration of the network device matches a transmit configuration. The receiving configuration includes at least one of a receiving antenna, a receiving weight, and a receiving bandwidth. The receiving weight may also be referred to as a receiving beam, receiving precoding, or a receiving spatial domain filter. The transmit configuration includes at least one of a transmit antenna, a transmit weight, or a transmit bandwidth. The transmit weight may also be referred to as a transmit beam, transmit precoding, or a transmit spatial domain filter. Configuration of the receiving antenna and the transmit antenna may be implemented by establishing a first association relationship between the transmit antenna of the terminal device and the receiving antenna of the terminal device, and/or a second association relationship between the transmit antenna of the network device and the receiving antenna of the network device. The first association relationship and the second association relationship may be predefined by using a protocol, or may be configured by the network device, or may be predefined by the device before delivery. For example, the first association relationship is determined by the terminal device based on an internal configuration of the terminal device. A transmit antenna 1 of the terminal corresponds to a receiving antenna 1, and a transmit antenna 3 corresponds to a receiving antenna 2. The terminal device may report the first association relationship to the network device, and for another example, the second association relationship is notified by the network device to the terminal device. The matching between the receiving weight and the transmit weight means that the terminal device and the network device use a same weight when receiving and sending a reference signal. The receiving bandwidth and the transmit bandwidth mean that the terminal device and the network device use a same bandwidth when receiving and sending a reference signal, or a bandwidth of an uplink channel is greater than or equal to a bandwidth of a downlink channel. When the uplink channel is used to train a neural network, a part of bandwidth may be extracted from the bandwidth of the uplink channel, so that the bandwidth of the uplink channel is equal to the bandwidth of the downlink channel after extraction.

S902: The network device sends a first reference signal to the terminal device, and correspondingly, the terminal device receives the first reference signal from the network device.

The first reference signal may be a downlink reference signal, and the network device may send a plurality of first reference signals to the terminal device. This is not limited in this embodiment of this application.

In a possible implementation, a receiving beam used by the terminal device to receive the first reference signal is the same as a transmit beam used by the terminal device to send a second reference signal. In other words, a spatial domain filter used by the terminal device to receive the first reference signal is the same as a spatial domain filter used by the terminal device to send the second reference signal. To achieve the foregoing objective, second precoding used by the terminal device to send the second reference signal is the same as first precoding used by the terminal device to receive the first reference signal.

Similarly, a receiving beam used by the network device to receive the second reference signal is the same as a transmit beam used by the network device to send the first reference signal. In other words, third precoding used by the network device to send the first reference signal is the same as fourth precoding used by the network device to receive the second reference signal.

In this embodiment of this application, a method for performing channel estimation by the terminal device is not limited in this application, and may be a conventional channel estimation algorithm, for example, an algorithm, or may be a neural network-based channel estimation algorithm.

S903: The terminal device determines a first matrix based on the first reference signal, determines a first channel eigen matrix based on the first matrix, and determines a first sparse matrix based on the first channel eigen matrix and a second sparse pattern.

In a possible implementation, the terminal device may perform channel estimation based on the first reference signal, to obtain the first matrix. The terminal device may determine a first spatial domain covariance matrix based on the first matrix, and perform singular value decomposition on the first spatial domain covariance matrix, to obtain the first channel eigen matrix. For a specific procedure of determining the first spatial domain covariance matrix based on the first matrix, refer to the descriptions of the second spatial domain covariance matrix. Details are not described herein again.

Further, the terminal device may extract some elements from the first channel eigen matrix based on the second sparse pattern, to obtain a first sparse matrix, where the first sparse matrix includes some elements extracted from the first channel eigen matrix. In other words, the second sparse pattern may be used to extract some elements from the first channel eigen matrix, to obtain the first sparse matrix The first sparse matrix is equivalent to a matrix obtained after the first channel eigen matrix is compressed.

S904: The terminal device sends first channel information to the network device, and correspondingly, the network device receives the first channel information from the terminal device.

The first channel information indicates the sparse channel state matrix.

The first channel information may be a set of values of elements in the sparse channel state matrix, or may be a set of quantized values of elements in the sparse channel state matrix, or may be in another form. This is not limited in this embodiment of this application.

S905: The network device processes the first sparse matrix through a neural network, to obtain a second matrix

The second matrix is a recovery value of the first channel eigen matrix, and the neural network is trained by using data obtained by performing sampling based on the second sparse pattern. For details, refer to the foregoing descriptions in the procedure shown in FIG. 4.

The network device may determine, based on the recovered second matrix, parameters such as the PMI and the RI that are used when the data is sent to the terminal device.

In addition, the network device needs to use a neural network to recover the first channel eigen matrix. Therefore, if training of the neural network is completed on the network device or on an AI module of the network device, the trained neural network does not need to be configured on the network device. If training of the neural network is completed on an independent AI network element, the trained neural network needs to be configured on the network device. A specific configuration process is not limited in this embodiment of this application. Details are not described herein again.

According to the foregoing method, when the terminal device does not need to participate in training a neural network, the network device can train the neural network only by using the second sparse matrix and the second channel eigen matrix, so that a requirement on a capability of the terminal device can be reduced, and feedback overheads caused by feeding back the complete first channel eigen matrix by the terminal device can be avoided.

In a possible implementation, in the procedures in FIG. 3 to FIG. 8, a bandwidth of the first reference signal may be less than or equal to a bandwidth of the second reference signal. A subcarrier spacing corresponding to the first reference signal is greater than or equal to a subcarrier spacing corresponding to the second reference signal.

In this implementation, the network device may configure a group of special first reference signals for the terminal device, where the bandwidth of the first reference signal is less than or equal to the bandwidth of the second reference signal, and the subcarrier spacing of the first reference signal is greater than or equal to the subcarrier spacing of the second reference signal.

In another implementation, the bandwidth and the subcarrier spacing of the first reference signal may be independently configured by the network device. To be specific, the bandwidth of the first reference signal may be greater than or equal to a bandwidth of an uplink active bandwidth part (bandwidth part, BWP) of the terminal device, and/or the subcarrier spacing of the first reference signal is irrelevant to the subcarrier spacing of the uplink active BWP of the terminal device. In other words, the subcarrier spacing of the first reference signal may be unequal to the subcarrier spacing of the uplink active BWP of the terminal device, a subcarrier spacing of a region that is in the uplink active BWP and that includes the first reference signal may be different from a subcarrier spacing of a region that is in the uplink active BWP and that does not include the first reference signal. The first reference signal may be carried in the uplink active BWP. The first reference signal may be divided into a plurality of segments in frequency domain, provided that a total bandwidth of the plurality of segments meets a requirement of recovering downlink channel information by the network device.

The bandwidth and the subcarrier spacing of the first reference signal are configured to be the same as those of the second reference signal, so that the solution in this embodiment of this application can be used when the bandwidth and the subcarrier spacing of the first reference signal are inconsistent with the bandwidth and the subcarrier spacing of the second reference signal, so that the network device can recover complete downlink channel information through a neural network.

The foregoing embodiments may be separately implemented, or may be implemented in combination with each other. In the foregoing, in different embodiments, differences between the embodiments are described in detail. Except for other content of the differences, for other content between different embodiments, reference may be made to each other. The step numbers of each flowchart described in the foregoing embodiments are merely a procedure execution example, and do not constitute a limitation on a step execution sequence. In embodiments of this application, there is no strict execution sequence between steps having no time sequence dependence relationship with each other. In addition, not all steps shown in each flowchart are necessarily performed steps, and some steps may be added or deleted based on each flowchart according to an actual requirement.

To implement the functions in the methods provided in embodiments of this application, the network device, the terminal device, or the communication apparatus may include a hardware structure and/or a software module, and the functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, functional modules in this application may be integrated into one processor, or each of the modules may exist alone physically, or two or more modules may be integrated into one module. The integrated module may be implemented in a form of hardware, or may be implemented in a form of a software functional module.

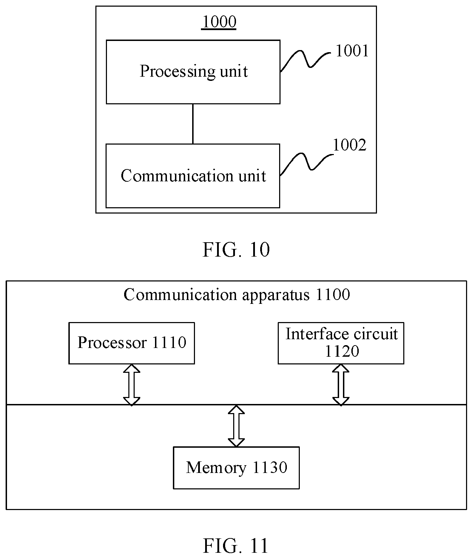

Same as the foregoing concept, as shown in FIG. 10, an embodiment of this application further provides a communication apparatus 1000. The communication apparatus 1000 may be the network device in FIG. 1, and is configured to implement the method for the network device in the foregoing method embodiment. Alternatively, the communication apparatus may be the core network device in FIG. 1, and is configured to implement the method corresponding to the core network device in the foregoing method embodiment. For specific functions, refer to the descriptions in the foregoing method embodiment.

Specifically, the communication apparatus 1000 may include a processing unit 1001 and a communication unit 1002. In this embodiment of this application, the communication unit may also be referred to as a transceiver unit, and may include a sending unit and/or a receiving unit, which are respectively configured to perform sending and receiving steps of the network device or the terminal device in the foregoing method embodiments. The following describes in detail communication apparatuses provided in embodiments of this application with reference to FIG. 10 and FIG. 11.

In some possible implementations, behavior and functions of the network device in the foregoing method embodiments may be implemented by using the communication apparatus 1000, for example, the methods performed by the network device in the embodiments in FIG. 4 to FIG. 6. For example, the communication apparatus 1000 may be a network device, a component (for example, a chip or a circuit) used in a network device, a chip or a chip set in a network device, or a part that is of a chip and that is configured to perform a related method function. The communication unit 1002 may be configured to perform a receiving or sending operation performed by the network device in the embodiments shown in FIG. 4 to FIG. 6. The processing unit 1001 may be configured to perform an operation other than a receiving or sending operation performed by the network device in the embodiments shown in FIG. 4 to FIG. 6.

When the communication apparatus implements functions of the terminal device in the procedures shown in FIG. 4 to FIG. 6,

the communication unit is configured to receive a first reference signal from a network device;
the processing unit is configured to: obtain a first channel state matrix based on a first reference signal; and perform sampling on the first channel state matrix based on a first sparse pattern, to obtain a sparse channel state matrix, where the first sparse pattern is configured by the network device, and the first sparse pattern is used for performing sampling on at least one dimension of the first channel state matrix; and
the communication unit is configured to send first channel information to the network device, where the first channel information indicates the sparse channel state matrix

In a possible design, the communication unit is further configured to send a second reference signal to the network device, where the second reference signal is used to train a neural network corresponding to the first sparse pattern, and the neural network is used to recover the first channel state matrix based on the sparse channel state matrix.

In a possible design, second precoding used for sending the second reference signal is the same as first precoding used for receiving the first reference signal.

In a possible design, a bandwidth of the first reference signal is less than or equal to a bandwidth of the second reference signal.

In a possible design, a subcarrier spacing corresponding to the first reference signal is the same as a subcarrier spacing corresponding to the second reference signal.

In a possible design, dimensions of the first channel state matrix include at least one of an antenna dimension of the terminal device, an antenna dimension of the network device, and a frequency domain dimension and a time domain dimension corresponding to the first reference signal; and

the first sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

When the communication apparatus implements functions of the network device in the procedures shown in FIG. 4 to FIG. 6,

the processing unit is configured to send a first reference signal to a terminal device by using the communication unit; and
the processing unit is configured to: receive first channel information from a terminal device by using the communication unit, where the first channel information indicates a sparse channel state matrix, the sparse channel state matrix is obtained by performing sampling on at least one dimension of a first channel state matrix by using a first sparse pattern, and the first channel state matrix is determined based on the first reference signal; and process the sparse channel state matrix through a neural network, to obtain a second channel state matrix, where the second channel state matrix is a recovery value of the first channel state matrix, and the neural network is trained by using data obtained by performing sampling based on the first sparse pattern.

In a possible design, the communication unit is further configured to receive a second reference signal from the terminal device.

The processing unit is further configured to: obtain a third channel state matrix based on the second reference signal; obtain a fourth channel state matrix based on the third channel state matrix, where a length of the fourth channel state matrix in a subcarrier dimension is equal to a length of the first channel state matrix in a subcarrier dimension; a length of the fourth channel state matrix in a receiving antenna dimension is equal to a length of the first channel state matrix in a transmit antenna dimension; and a length of the fourth channel state matrix in a transmit antenna dimension is equal to a length of the first channel state matrix in a receiving antenna dimension; and perform sampling on at least one dimension of the fourth channel state matrix based on the first sparse pattern, to obtain a fifth channel state matrix, where the neural network is obtained by training a plurality of fourth channel state matrices and corresponding fifth channel state matrices.

In a possible design, the communication unit is further configured to receive a second reference signal from the terminal device, where the second reference signal is used to train the neural network corresponding to the first sparse pattern, and the neural network is used to recover the first channel state matrix based on the sparse channel state matrix.

In a possible design, fourth precoding used for receiving the second reference signal is the same as third precoding used for sending the first reference signal.

In a possible design, a bandwidth of the first reference signal is less than or equal to a bandwidth of the second reference signal.

In a possible design, a subcarrier spacing corresponding to the first reference signal is the same as a subcarrier spacing corresponding to the second reference signal.

In a possible design, dimensions of the first channel state matrix include at least one of an antenna dimension of the terminal device, an antenna dimension of the network device, and a frequency domain dimension and a time domain dimension corresponding to the first reference signal.

The first sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

When the communication apparatus implements functions of the terminal device in the procedures shown in FIG. 7 to FIG. 9,

the communication unit is configured to receive a first reference signal from a network device;
the processing unit is configured to: perform channel estimation based on the first reference signal, to obtain a first channel state matrix; determine a first channel eigen matrix based on the first channel state matrix; and perform sampling on the first channel eigen matrix based on a second sparse pattern, to obtain a first sparse matrix, where the second sparse pattern is configured by the network device, and the second sparse pattern is used for performing sampling on at least one dimension of the first channel eigen matrix; and
the communication unit is configured to send first channel information to the network device, where the first channel information indicates the first sparse matrix.

In a possible design, the communication unit is further configured to send a second reference signal to the network device, where the second reference signal is used to train a neural network corresponding to the first sparse pattern, and the neural network is used to recover the second matrix based on the first sparse matrix.

In a possible design, second precoding used for sending the second reference signal is the same as first precoding used for receiving the first reference signal.

In a possible design, a bandwidth of the first reference signal is less than or equal to a bandwidth of the second reference signal.

In a possible design, a subcarrier spacing corresponding to the first reference signal is the same as a subcarrier spacing corresponding to the second reference signal.

In a possible design, dimensions of the first channel state matrix include at least one of an antenna dimension of the terminal device, an antenna dimension of the network device, and a frequency domain dimension and a time domain dimension corresponding to the first reference signal.

The second sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

When the communication apparatus implements functions of the network device in the procedures shown in FIG. 7 to FIG. 9,

the processing unit is configured to send a first reference signal to a terminal device by using the communication unit; and

the processing unit is configured to: receive first channel information from the terminal device, where the first channel information indicates a first sparse matrix, the first sparse matrix is obtained by performing sampling on at least one dimension of a first channel eigenvector matrix by using a second sparse pattern, the first channel eigen matrix is determined based on a first channel state matrix, and the first channel state matrix is determined based on the first reference signal; and process the first sparse matrix through a neural network, to obtain a second matrix, where the second matrix is a recovery value of the first channel eigen matrix, and the neural network is trained by using data obtained by performing sampling based on the second sparse pattern.

In a possible design, the communication unit is further configured to receive a second reference signal from the terminal device, where the second reference signal is used to train the neural network corresponding to the second sparse pattern, and the neural network is used to recover the second matrix based on the first sparse matrix.

In a possible design, fourth precoding used for receiving the second reference signal is the same as third precoding used for sending the first reference signal.

In a possible design, a bandwidth of the first reference signal is less than or equal to a bandwidth of the second reference signal.

In a possible design, a subcarrier spacing corresponding to the first reference signal is the same as a subcarrier spacing corresponding to the second reference signal.

In a possible design, dimensions of the first channel state matrix include at least one of an antenna dimension of the terminal device, an antenna dimension of the network device, and a frequency domain dimension and a time domain dimension corresponding to the first reference signal.

The second sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

It should be understood that descriptions of the apparatus embodiments correspond to descriptions of the method embodiments. For apparatus structures used to implement the terminal device and the network device in FIG. 4 to FIG. 9, refer to the communication apparatus 1000. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the communication unit 1002 may be considered as a receiving unit, and a component configured to implement a sending function in the communication unit 1002 may be considered as a sending unit. In other words, the communication unit 1002 includes a receiving unit and a sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

The foregoing is merely an example. The processing unit 1001 and the communication unit 1002 may further perform other functions. For more detailed descriptions, refer to related descriptions in the method embodiments shown in FIG. 4 to FIG. 9. Details are not described herein again.

FIG. 11 shows a communication apparatus 1100 according to an embodiment of this application. The communication apparatus shown in FIG. 11 may be an implementation of a hardware circuit of the communication apparatus shown in FIG. 10. The communication apparatus is applicable to the foregoing flowchart, and may perform the function of the terminal device or the network device in the foregoing method embodiments. For ease of description, FIG. 11 shows only main components of the communication apparatus.

As shown in FIG. 11, the communication apparatus 1100 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130 for storing instructions executed by the processor 1110, or input data required by the processor 1110 to run the instructions, or data generated after the processor 1110 runs the instructions.

When the communication apparatus 1100 is configured to implement the methods shown in FIG. 4 to FIG. 9, the processor 1110 is configured to implement a function of the foregoing processing unit 1001, and the interface circuit 1120 is configured to implement a function of the foregoing communication unit 1002.

When the communication apparatus is a chip used in a terminal device, the terminal device chip implements a function of the terminal device in the foregoing method embodiments. The chip of the terminal device receives information from another module (for example, a radio frequency module or an antenna) in the terminal device, where the information is sent by a network device to the terminal device. Alternatively, the chip of the terminal device sends information to another module (for example, a radio frequency module or an antenna) in the terminal device, where the information is sent by the terminal device to a network device.

When the communication apparatus is a chip used in a network device, the chip of the network device implements a function of the network device in the foregoing method embodiments. The chip of the network device receives information from another module (for example, a radio frequency module or an antenna) in the network device, where the information is sent by a terminal device to the network device. Alternatively, the chip of the network device sends information to another module (for example, a radio frequency module or an antenna) in the network device, where the information is sent by the network device to a terminal device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device or a transistor logic device. The general-purpose processor may be a microprocessor or any conventional processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk drive, a CD-ROM, or any other form of storage medium well known in the art. For example, a storage medium is coupled to a processor, so that the processor can read information from the storage medium and write the information into the storage medium. Certainly, the storage medium may be a component of the processor. The processor and the storage medium may be disposed in an ASIC. In addition, the ASIC may be located in the network device or the terminal device. The processor and the storage medium may alternatively exist in the network device or the terminal device as discrete components.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims and their equivalent technologies.

**Claims**

**1.** A channel information feedback method, applied to a terminal device, and comprising:

receiving a first reference signal from a network device;
obtaining a first channel state matrix based on the first reference signal;

performing sampling on the first channel state matrix based on a first sparse pattern, to obtain a sparse channel state matrix, wherein the first sparse pattern is configured by the network device, and the first sparse pattern is used for performing sampling on at least one dimension of the first channel state matrix; and

sending first channel information to the network device, wherein the first channel information indicates the sparse channel state matrix.

2. The method according to claim 1, wherein the method further comprises:
sending a second reference signal to the network device, wherein the second reference signal is used to train a neural network corresponding to the first sparse pattern, and the neural network is used to recover the first channel state matrix based on the sparse channel state matrix.

3. The method according to claim 2, wherein second precoding used for sending the second reference signal is the same as first precoding used for receiving the first reference signal.

4. The method according to claim 2 or 3, wherein a bandwidth of the first reference signal is less than or equal to a bandwidth of the second reference signal.

5. The method according to claim 2 or 3, wherein a subcarrier spacing corresponding to the first reference signal is the same as a subcarrier spacing corresponding to the second reference signal.

6. The method according to any one of claims 1 to 5, wherein dimensions of the first channel state matrix comprise at least one of an antenna dimension of the terminal device, an antenna dimension of the network device, and a frequency domain dimension and a time domain dimension corresponding to the first reference signal; and
the first sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

7. A channel information recovery method, applied to a network device, comprising:

sending a first reference signal to a terminal device;
receiving first channel information from the terminal device, wherein the first channel information indicates a sparse channel state matrix, the sparse channel state matrix is obtained by performing sampling on at least one dimension of a first channel state matrix by using a first sparse pattern, and the first channel state matrix is determined based on the first reference signal; and
processing the sparse channel state matrix through a neural network, to obtain a second channel state matrix, wherein the second channel state matrix is a recovery value of the first channel state matrix, and the neural network is trained by using data obtained by performing sampling based on the first sparse pattern.

8. The method according to claim 7, wherein the method further comprises:

receiving a second reference signal from the terminal device;
obtaining a third channel state matrix based on the second reference signal;
obtaining a fourth channel state matrix based on the third channel state matrix, wherein a length of the fourth channel state matrix in a subcarrier dimension is equal to a length of the first channel state matrix in a subcarrier dimension; a length of the fourth channel state matrix in a receiving antenna dimension is equal to a length of the first channel state matrix in a transmit antenna dimension; and a length of the fourth channel state matrix in a transmit antenna dimension is equal to a length of the first channel state matrix in a receiving antenna dimension; and
performing sampling on at least one dimension of the fourth channel state matrix based on the first sparse pattern, to obtain a fifth channel state matrix, wherein the neural network is obtained by training a plurality of fourth channel state matrices and corresponding fifth channel state matrices.

9. The method according to claim 7, wherein the method further comprises:
receiving a second reference signal from the terminal device, wherein the second reference signal is used to train the neural network corresponding to the first sparse pattern, and the neural network is used to recover the first channel state matrix based on the sparse channel state matrix.

**10.** The method according to claim 9, wherein fourth precoding used for receiving the second reference signal is the same as third precoding used for sending the first reference signal.

**11.** The method according to claim 9 or 10, wherein a bandwidth of the first reference signal is less than or equal to a bandwidth of the second reference signal.

**12.** The method according to claim 9 or 10, wherein a subcarrier spacing corresponding to the first reference signal is the same as a subcarrier spacing corresponding to the second reference signal.

**13.** The method according to any one of claims 7 to 12, wherein dimensions of the first channel state matrix comprise at least one of an antenna dimension of the terminal device, an antenna dimension of the network device, and a frequency domain dimension and a time domain dimension corresponding to the first reference signal; and
the first sparse pattern indicates at least one of the following: an index of at least one antenna in the antenna dimension of the terminal device, an index of at least one antenna in the antenna dimension of the network device, an index of at least one frequency domain unit in the frequency domain dimension, and an index of at least one time domain unit in the time domain dimension.

**14.** A channel information feedback method, applied to a terminal device, comprising:

receiving a first reference signal from a network device;
performing channel estimation based on the first reference signal, to obtain a first channel state matrix;
determining a first channel eigen matrix based on the first channel state matrix;
performing sampling on the first channel eigen matrix based on a second sparse pattern, to obtain a first sparse matrix, wherein the second sparse pattern is configured by the network device, and the second sparse pattern is used for performing sampling on at least one dimension of the first channel eigen matrix; and
sending first channel information to the network device, wherein the first channel information indicates the first sparse matrix.

**15.** A channel information recovery method, applied to a network device, comprising:

sending a first reference signal to a terminal device;
receiving first channel information from the terminal device, wherein the first channel information indicates a first sparse matrix, the first sparse matrix is obtained by performing sampling on at least one dimension of a first channel eigenvector matrix by using a second sparse pattern, the first channel eigen matrix is determined based on a first channel state matrix, and the first channel state matrix is determined based on the first reference signal; and
processing the first sparse matrix through a neural network, to obtain a second matrix, wherein the second matrix is a recovery value of the first channel eigen matrix, and the neural network is trained by using data obtained by performing sampling based on the second sparse pattern.

**16.** A communication apparatus, configured to implement the method according to any one of claims 1 to 6 and 14.

**17.** A communication apparatus, configured to implement the method according to any one of claims 7 to 13 and 15.

**18.** A communication apparatus, comprising a processor, wherein the processor is coupled to a memory; and
the processor is configured to execute a computer program or instructions stored in the memory, so that the communication apparatus is enabled to implement the method according to any one of claims 1 to 6 and 14.

**19.** A communication apparatus, comprising a processor, wherein the processor is coupled to a memory; and
the processor is configured to execute a computer program or instructions stored in the memory, so that the communication apparatus is enabled to implement the method according to any one of claims 7 to 13 and 15.

**20.** A computer-readable storage medium, storing a computer program or instructions, wherein when the computer program or the instructions is/are run on a computer, the computer is enabled to implement the method according to any one of claims 1 to 6 and 14, or the computer is enabled to implement the method according to any one of claims 7 to 13 and 15.

**21.** A computer program product, comprising instructions, wherein when the instructions are run on a computer, the computer is enabled to implement the method according to any one of claims 1 to 6 and 14, or the computer is enabled to implement the method according to any one of claims 7 to 13 and 15.

FIG. 1

FIG. 2

Network
device

Terminal
device

Channel
estimation

Channel state
information

Decoder

Encoder

FIG. 3

FIG. 4

$H^U_{sparse}$ → | Neural network $f(\cdot)$ | → $H^U_{dense}$

AI model

FIG. 5

| Terminal device | | Network device |

S601: The network device sends first information to the terminal device

← First information

S602: The terminal device receives the first information from the network device

S603: The network device sends a first reference signal to the terminal device, and correspondingly, the terminal device receives the first reference signal from the network device

← First reference signal

S604: The terminal device determines a sparse channel state matrix based on the first reference signal and a first sparse pattern

S605: The terminal device sends first channel information to the network device, and correspondingly, the network device receives the first channel information from the terminal device

First channel information →

S606: The network device processes, through a neural network, the sparse channel state matrix indicated by the first channel information, to obtain a second channel state matrix

FIG. 6

| Terminal device | Network device | AI entity |
|---|---|---|

S701: The terminal device sends a second reference signal to the network device, and correspondingly, the network device receives the second reference signal from the terminal device

Second reference signal

S702: The network device performs channel estimation based on the second reference signal, to obtain uplink channel state information

S703: The network device determines a second sparse matrix based on the uplink channel state information

S704: The network device sends a second channel eigen matrix and the second sparse matrix to the AI entity, and correspondingly, the AI entity receives the second channel eigen matrix and the second sparse matrix

Second channel eigen matrix and second sparse matrix

S705: The AI entity trains a neural network based on the second channel eigen matrix and the second sparse matrix

FIG. 7

$$V^U_{sparse} \rightarrow \boxed{\begin{array}{c} \text{Neural network} \\ f(\cdot) \end{array}} \rightarrow V^U_{dense}$$

AI model

FIG. 8

| Terminal device | Network device |
|---|---|

S901: The network device sends second information to the terminal device, and correspondingly, the terminal device receives the second information from the network device

Second information

S902: The network device sends a first reference signal to the terminal device, and correspondingly, the terminal device receives the first reference signal from the network device

First reference signal

S903: The terminal device determines a first matrix based on the first reference signal, determines a first channel eigen matrix based on the first matrix, and determines a first sparse matrix based on the first channel eigen matrix and a second sparse pattern

S904: The terminal device sends first channel information to the network device, and correspondingly, the network device receives the first channel information from the terminal device

First channel information

S905: The network device processes the first sparse matrix through a neural network, to obtain a second matrix

FIG. 9

1000

Processing unit ~1001

Communication unit ~1002

FIG. 10

Communication apparatus 1100

Processor 1110

Interface circuit 1120

Memory 1130

FIG. 11

## INTERNATIONAL SEARCH REPORT

| International application No. |
| --- |
| **PCT/CN2022/111628** |

| A. | CLASSIFICATION OF SUBJECT MATTER |
| --- | --- |

H04W 28/06(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; IEEE; 3GPP: 信道状态, 反馈, 报告, 矩阵, 稀疏, 抽样, 采样, 降维, 压缩, 神经网络, 恢复, 训练, 参考信号, CSI, feedback, report, matrix, sparse, sampling, compress, dimension, reduction, neural network, recover, train

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020180221 A1 (TELEFONAKTIEBOLAGET LM ERICSSON (PUBL)) 10 September 2020 (2020-09-10) description, page 15, line 11 to page 17, line 12 and page 29, line 10 to page 50, line 9 | 1-21 |
| X | CN 111464220 A (XI'AN JIAOTONG UNIVERSITY) 28 July 2020 (2020-07-28) description, paragraphs [0045]-[0092] | 1-21 |
| X | CN 109474316 A (SOUTHEAST UNIVERSITY) 15 March 2019 (2019-03-15) description, paragraphs [0062]-[0093] | 1-21 |
| A | WO 2020047774 A1 (HUAWEI TECHNOLOGIES CO., LTD.) 12 March 2020 (2020-03-12) entire document | 1-21 |

☐ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 September 2022** | **26 September 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/111628**

| Patent document cited in search report | | | Publication date (day/month/year) | Patent family member(s) | | | Publication date (day/month/year) |
|---|---|---|---|---|---|---|---|
| WO | 2020180221 | A1 | 10 September 2020 | US | 2022149904 | A1 | 12 May 2022 |
| | | | | EP | 3935742 | A1 | 12 January 2022 |
| CN | 111464220 | A | 28 July 2020 | CN | 111464220 | B | 29 June 2021 |
| CN | 109474316 | A | 15 March 2019 | CN | 109474316 | B | 09 November 2021 |
| WO | 2020047774 | A1 | 12 March 2020 | | None | | |

Form PCT/ISA/210 (patent family annex) (January 2015)

**EP 4 376 479 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110918725